# EUROPEAN PATENT APPLICATION

(11) **EP 4 625 620 A1**
(43) Date of publication of application: **01.10.2025**
(21) Application number: 23938766.5
(22) Date of filing: 29.05.2023
(51) Int. Cl.: H01M 10/633, H02J 7/00, H02J 3/38, H01M 10/613, H01M 10/617, H01M 10/627

(54) **BATTERY SYSTEM TEMPERATURE CONTROL METHOD AND APPARATUS, AND BATTERY SYSTEM**

(71) Applicant: Contemporary Amperex Technology Co., Limited, Ningde, Fujian 352100 (CN)
(72) Inventor: WANG, Yafei, Ningde, Fujian 352100 (CN); ZUO, Xiyang, Ningde, Fujian 352100 (CN); LUO, Guangsheng, Ningde, Fujian 352100 (CN); LI, Zhonghong, Ningde, Fujian 352100 (CN); XU, Jinmei, Ningde, Fujian 352100 (CN); WU, Kai, Ningde, Fujian 352100 (CN)
(74) Representative: Ziebig Hengelhaupt Intellectual Property Attorneys Patentanwaltskanzlei PartGmbB
(86) International application number: PCT/CN2023/096772
(87) International publication number: WO 2024/243768

(57) **Abstract**

Embodiments of the present application provide a battery system temperature control method and apparatus, and a battery system. The battery system temperature control method includes: obtaining a cluster temperature of each of a plurality of battery clusters of the battery system; and performing temperature control on each battery cluster according to the cluster temperature of each battery cluster. Through the technical solution, the cluster temperature of each battery cluster in the battery system can represent an overall temperature condition of each battery cluster, and temperature control is performed on each battery cluster according to the cluster temperature of each battery cluster, which is beneficial for implementing inter-cluster temperature uniformity among the plurality of battery clusters in the battery system, solving a problem of non-uniform impedance and current in the battery clusters caused by inconsistent inter-cluster temperatures, reducing a situation that the battery clusters are fully charged or discharged in advance during charging, and improving energy conversion efficiency of the battery system, thus improving operation performance of the battery system in which the plurality of battery clusters are included.

## Description

### TECHNICAL FIELD

Embodiments of the present application relate to the field of batteries, and more particular, to a battery system temperature control method and apparatus, and a battery system.

### BACKGROUND

With the rapid development of energy technology, batteries have become an indispensable part in human life. In some scenes, a plurality of batteries can be connected in series or in parallel to form a battery system for use in an energy storage system or a power system. In a case that a battery is overcharged or works at high current for a long time, the temperature of the battery will rise, which affects the normal charging and discharging performance of the battery. In more serious cases, thermal runaway may occur, causing a safety problem. When the plurality of batteries are arranged closely together in the battery system, heat from a battery can easily spread, causing thermal runaway in other batteries. Such a chain reaction will greatly increase the risk of failure of the battery system.

In view of this, how to perform effective temperature control on the battery system to improve the performance of the battery system is a technical problem that needs to be solved urgently.

### SUMMARY OF THE INVENTION

Embodiments of the present application provide a battery system temperature control method and apparatus, and a battery system, which can effectively control a temperature of the battery system to improve performance of the battery system.

In a first aspect, a battery system temperature control method is provided, including: obtaining a cluster temperature of each of a plurality of battery clusters of a battery system; and performing temperature control on each battery cluster according to the cluster temperature of each battery cluster.

According to the technical solutions of the embodiments of the present application, the cluster temperature of each battery cluster in the battery system is first obtained. The cluster temperature can represent an overall temperature condition of each battery cluster, and temperature control is then further performed on each battery cluster according to the cluster temperature of each battery cluster. This is beneficial for implementing inter-cluster temperature uniformity among the plurality of battery clusters in the battery system, solving a problem of non-uniform impedance and current in the battery clusters caused by inconsistent inter-cluster temperatures, reducing a situation that the battery clusters are fully charged or discharged in advance during charging, and improving energy conversion efficiency of the battery system, thus improving operation performance of the battery system in which the plurality of battery clusters are included.

In some possible implementations, the cluster temperature of each battery cluster includes: a mean temperature of each battery cluster; the mean temperature of each battery cluster is a mean temperature value of batteries in each battery cluster; and the performing temperature control on each battery cluster according to the cluster temperature of each battery cluster includes: determining a target mean temperature of the plurality of battery clusters according to the mean temperature of each battery cluster, wherein the target mean temperature is a maximum value, a minimum value, or a mean value among the mean temperatures of the plurality of battery clusters; and performing temperature control on each battery cluster according to a difference between the mean temperature of each battery cluster and the target mean temperature.

Through the technical solution of this implementation, the target mean temperature determined based on the mean temperature of each of the plurality of battery clusters can change along with an overall temperature change of the plurality of battery clusters. Therefore, the temperature control is performed on each battery cluster according to the mean temperature of each battery cluster and the target mean temperature. This can achieve more accurate and effective temperature control on each battery cluster in the battery system and maintain inter-cluster temperature uniformity, to further improve overall performance of the battery system.

In some possible implementations, the performing temperature control on each battery cluster according to a difference between the mean temperature of each battery cluster and the target mean temperature includes: in a case that a difference between a mean temperature of a first battery cluster in the plurality of battery clusters and the target mean temperature is beyond a first preset range, performing temperature regulation on the first battery cluster.

Through the technical solution of the above implementation, the temperature control or temperature maintenance on any battery cluster can be achieved directly based on whether the difference between any battery cluster (i.e., the first battery cluster) in the plurality of battery clusters and the target mean temperature is within the first preset range, to reduce an inter-cluster temperature difference of the plurality of battery clusters. This technical solution is easily implemented and has high reliability, which is conducive to further improving the overall performance of the battery system.

In some possible embodiments, the performing temperature regulation on the first battery cluster, to cause the difference between the mean temperature of the first battery cluster and the mean temperature of another battery cluster in the plurality of battery clusters to be within a second preset range includes: controlling a regulation temperature of a first temperature regulation apparatus corresponding to the first battery cluster, the first temperature regulation apparatus being configured to perform temperature regulation on the first battery cluster.

Through the technical solution of this implementation, the first battery cluster has the corresponding first temperature regulation apparatus. By controlling the first temperature regulation apparatus to perform the temperature regulation on the first battery cluster, it is conducive to improving the accuracy and effectiveness of temperature control on the first battery cluster.

In some possible implementations, the controlling a regulation temperature of a first temperature regulation apparatus corresponding to the first battery cluster, the first temperature regulation apparatus being configured to perform temperature regulation on the first battery cluster includes: controlling the regulation temperature of the first temperature regulation apparatus corresponding to the first battery cluster to be the target mean temperature, the first temperature regulation apparatus being configured to perform temperature regulation on the first battery cluster.

Through the technical solution of this implementation, the regulation temperature of the first temperature regulation apparatus corresponding to the first battery cluster can be controlled to be the target mean temperature, so that the first temperature regulation apparatus can effectively and accurately regulate the temperature of the first battery cluster based on the target mean temperature, and the mean temperature of the first battery cluster can be close to the target mean temperature and maintained within a specific threshold range, which effectively reduces the inter-cluster temperature difference between the first battery cluster and another battery cluster and improving the overall performance of the battery system.

In some possible implementations, the first preset range is between -5 degrees Celsius and 5 degrees Celsius. Optionally, the first preset range is -2 degrees Celsius and 2 degrees Celsius.

In some possible implementations, the performing temperature control on each battery cluster according to a difference between the mean temperature of each battery cluster and the target mean temperature includes: in a case that the difference between the mean temperature of the first battery cluster in the plurality of battery clusters and the target mean temperature is within the first preset range, maintaining a current temperature of the first battery cluster.

In some possible implementations, the cluster temperature of each battery cluster includes: a maximum temperature and/or a minimum temperature of each battery cluster; the maximum temperature of each battery cluster is a maximum temperature value of the batteries in each battery cluster; the minimum temperature of each battery cluster is a minimum temperature value of the batteries in each battery cluster; and the performing temperature control on each battery cluster according to the cluster temperature of each battery cluster includes: performing temperature control on each battery cluster according to the maximum temperature and/or the minimum temperature of each battery cluster.

Through the technical solution of this implementation, the temperature control can be performed on each battery cluster both according to the mean temperature of each of the plurality of battery clusters and according to the maximum temperature and/or the minimum temperature of each battery cluster, which is conducive to performing further fine regulation on the temperature of each battery cluster, so that higher uniformity is maintained for the temperatures between the batteries inside each battery cluster.

In some possible embodiments, the performing temperature control on each battery cluster according to the maximum temperature and/or the minimum temperature of each battery cluster includes: in a case that the difference between the mean temperature of each of the plurality of battery clusters and the target mean temperature is within the first preset range, performing temperature control on each battery cluster according to the maximum temperature and/or the minimum temperature of each battery cluster, where the target mean temperature is a maximum value, a minimum value, or a mean value among the mean temperatures of the plurality of battery clusters.

Through the technical solution of this implementation, the mean temperature of each of the plurality of battery clusters is first controlled within a particular range, so that the plurality of battery clusters can achieve an inter-cluster balance, and it is easy to subsequently perform fine temperature control on each battery cluster according to the maximum temperature and/or the minimum temperature of each battery cluster, thereby improving temperature regulation efficiency and regulation effect on the plurality of battery clusters.

In some possible implementations, the performing temperature control on each battery cluster according to the maximum temperature and/or the minimum temperature of each battery cluster includes: in a case that the maximum temperature of a first battery cluster in the plurality of battery clusters is greater than a first preset value, performing temperature decrease regulation on the first battery cluster.

Through the technical solution of this implementation, the first preset value is compared with the maximum temperature of the first battery cluster to control the temperature decrease regulation on the first battery cluster. The overall implementation mode is simple and the control reliability is high.

In some possible implementations, the performing temperature decrease regulation on the first battery cluster includes: obtaining a regulation temperature of a first temperature regulation apparatus corresponding to the first battery cluster; and performing the temperature decrease regulation on the first battery cluster according to the regulation temperature of the first temperature regulation apparatus.

Through the technical solution of this implementation, based on obtaining the maximum temperature of the first battery cluster, the regulation temperature of the first temperature regulation apparatus corresponding to the first battery cluster is further obtained, and the regulation temperature of the first temperature regulation apparatus is fully used to perform the temperature decrease regulation on the first battery cluster, thereby reducing a possibility of real-time operation of the first temperature regulation apparatus and reducing operation power consumption of the first temperature regulation apparatus.

In some possible embodiments, the performing the temperature decrease regulation on the first battery cluster according to the regulation temperature of the first temperature regulation apparatus includes: in a case that the regulation temperature of the first temperature regulation apparatus is greater than a first preset regulation value, controlling the regulation temperature of the first temperature regulation apparatus to decrease, to perform the temperature decrease regulation on the first battery cluster; or, in a case that the regulation temperature of the first temperature regulation apparatus is less than or equal to a first preset regulation value, controlling the first temperature regulation apparatus to perform the temperature decrease regulation on the first battery cluster by using a current regulation temperature.

In some possible embodiments, the performing temperature control on each battery cluster according to the maximum temperature and/or the minimum temperature of each battery cluster includes: in a case that the minimum temperature of a first battery cluster in the plurality of battery clusters is less than or equal to a second preset value, performing temperature increase regulation on the first battery cluster.

Through the technical solution of this implementation, the second preset value is compared with the minimum temperature of the first battery cluster to control the temperature increase regulation on the first battery cluster. The overall implementation mode is simple and the control reliability is high.

In some possible embodiments, the performing temperature increase regulation on the first battery cluster includes: obtaining a regulation temperature of a first temperature regulation apparatus corresponding to the first battery cluster; and performing the temperature increase regulation on the first battery cluster according to the regulation temperature of the first temperature regulation apparatus.

Through the technical solution of this implementation, based on obtaining the minimum temperature of the first battery cluster, the regulation temperature of the first temperature regulation apparatus corresponding to the first battery cluster is further obtained, and the regulation temperature of the first temperature regulation apparatus is fully used to perform the temperature increase regulation on the first battery cluster, thereby reducing a possibility of real-time operation of the first temperature regulation apparatus and reducing operation power consumption of the first temperature regulation apparatus.

In some possible embodiments, the performing the temperature increase regulation on the first battery cluster according to the regulation temperature of the first temperature regulation apparatus includes: in a case that the regulation temperature of the first temperature regulation apparatus is less than or equal to a second preset regulation value, controlling the regulation temperature of the first temperature regulation apparatus to increase, to perform the temperature increase regulation on the first battery cluster; or, in a case that the regulation temperature of the first temperature regulation apparatus is greater than a second preset regulation value, controlling the first temperature regulation apparatus to perform the temperature increase regulation on the first battery cluster by using a current regulation temperature.

In some possible implementations, the performing temperature control on each battery cluster according to the maximum temperature and/or the minimum temperature of each battery cluster includes: in a case that a difference between the maximum temperature and the minimum temperature of the first battery cluster in the plurality of battery clusters is greater than a third preset value, performing temperature regulation on the first battery cluster; or, in a case that a difference between the maximum temperature and the minimum temperature of the first battery cluster in the plurality of battery clusters is less than or equal to a third preset value, closing temperature regulation on the first battery cluster.

Through the technical solution of this implementation, the maximum temperature and the minimum temperature of the first battery cluster can be obtained, and a temperature regulation mode of the first battery cluster can be determined according to the difference between the maximum temperature and the minimum temperature, which is conducive to further improving in-cluster temperature uniformity of the first battery cluster, to improve the overall performance of the battery system.

In some possible implementations, the cluster temperature of each battery cluster includes a mean temperature of each battery cluster; the mean temperature of each battery cluster is a mean temperature value of batteries in each battery cluster; and the performing temperature control on each battery cluster according to the cluster temperature of each battery cluster includes: performing temperature control on each battery cluster according to the mean temperature of each battery cluster and a preset temperature range.

Through the technical solution of this implementation, the temperature control can be performed on each battery cluster both according to the difference between the mean temperature of each battery cluster and the target mean temperature and according to the mean temperature of each battery cluster and the preset temperature range, which is conducive to controlling the mean temperature of each of the plurality of battery clusters to be within the preset temperature range, to further improve the inter-cluster temperature uniformity among the plurality of battery clusters.

In some possible implementations, the performing temperature control on each battery cluster according to the mean temperature of each battery cluster and a preset temperature range includes: in a case that a mean temperature of a first battery cluster in the plurality of battery clusters is greater than a maximum value within the preset temperature range, performing temperature decrease regulation on the first battery cluster, to cause the mean temperature of the first battery cluster to be within the preset temperature range; or, in a case that a mean temperature of a first battery cluster in the plurality of battery clusters is less than a minimum value within the preset temperature range, performing temperature increase regulation on the first battery cluster, to cause the mean temperature of the first battery cluster to be within the preset temperature range.

In some possible implementations, the performing temperature decrease regulation on the first battery cluster, to cause the mean temperature of the first battery cluster to be within the preset temperature range includes: controlling a regulation temperature of a first temperature regulation apparatus corresponding to the first battery cluster to be less than or equal to the maximum value within the preset temperature range, the first temperature regulation apparatus being configured to perform temperature decrease regulation on the first battery cluster, to cause the mean temperature of the first battery cluster to be within the preset temperature range; or, the performing temperature increase regulation on the first battery cluster, to cause the mean temperature of the first battery cluster to be within the preset temperature range includes: controlling a regulation temperature of a first temperature regulation apparatus corresponding to the first battery cluster to be greater than or equal to the minimum value within the preset temperature range, the first temperature regulation apparatus being configured to perform temperature increase regulation on the first battery cluster, to cause the mean temperature of the first battery cluster to be within the preset temperature range.

Through the technical solution of this implementation, the minimum value or the maximum value within the preset temperature range can be directly used to regulate the regulation temperature corresponding to the first temperature regulation apparatus of the first battery cluster. This solution is easily implemented, and is conductive to improving the temperature regulation efficiency and regulation effect of the first temperature regulation apparatus on the first battery cluster.

In some possible implementations, before the performing temperature control on each battery cluster according to the cluster temperature of each battery cluster, the temperature control method further includes: obtaining electrical parameters of the plurality of battery clusters; and determining, according to the electrical parameters, that the plurality of battery clusters are in a non-charging or discharging state.

Through the technical solution of this embodiment, a battery system temperature control method applied to a non-charging or discharging state is provided. According to the temperature control method, in a case that the plurality of battery clusters are in the non-charging or discharging state, the temperature control is performed on the plurality of battery clusters according to the cluster temperatures of the plurality of battery clusters, which is conductive to reducing a possibility of a large inter-cluster temperature difference in the plurality of battery clusters during charging or discharging and improving charging or discharging performance of the battery system in which the plurality of battery clusters are included.

In some possible implementations, the temperature control method is applied to a battery management system (BMS); and the performing temperature control on each battery cluster according to the cluster temperature of each battery cluster includes: sending, by the BMS, a temperature control command to a temperature regulation apparatus corresponding to each battery cluster according to the cluster temperature of each battery cluster, to cause the temperature regulation apparatus to perform temperature control on each battery cluster according to the temperature control command.

Through the technical solution of this implementation, the BMS, as a main management unit in the battery system, can obtain multi-aspect information of the plurality of battery clusters in the battery system, and the BMS is used to control the temperature regulation apparatuses to perform temperature control on the plurality of battery clusters. The overall technical solution is easily implemented and has high reliability, which is conducive to comprehensively improving the overall performance of the battery system.

In some possible implementations, a fluid is accommodated in the temperature regulation apparatus, and the fluid is configured to regulate a temperature of each battery cluster.

In a case that the temperature regulation apparatus is a liquid-cooled temperature regulation apparatus, the liquid-cooled temperature regulation apparatus can implement relatively uniform and effective temperature regulation on the plurality of battery clusters. Compared with a scene in which temperature regulation uniformity of an air-cooled temperature regulation apparatus(such as a fan) is poor, the technical solution of this implementation can further enhance a temperature regulation effect on the plurality of battery clusters in the battery system.

In a second aspect, a battery system temperature control apparatus is provided, including: an obtaining unit, configured to obtain a cluster temperature of each of a plurality of battery clusters of a battery system; and a control unit, configured to perform temperature control on each battery cluster according to the cluster temperature of each battery cluster.

In a third aspect, a battery system temperature control apparatus is provided, including: a processor and a memory. The memory is configured to store a computer program, and the processor is configured to call and run the computer program stored in the memory to perform the battery system temperature control method in the first aspect or any possible implementation in the first aspect.

In a fourth aspect, a battery system is provided, including: a plurality of battery clusters; and the temperature control apparatus in the second aspect or the third aspect. The temperature control apparatus is configured to perform temperature control on each of the plurality of battery clusters.

In some possible implementations, the battery system further includes: a temperature regulation apparatus. The temperature control apparatus is configured to send a temperature control command to the temperature regulation apparatus, so that the temperature regulation apparatus performs temperature control on each battery cluster according to the temperature control command.

In a fifth aspect, a computer-readable medium is provided, configured to store a computer program. The computer program is configured to perform the battery system temperature control method in the first aspect or any possible implementation in the first aspect.

According to the technical solutions of the embodiments of the present application, the cluster temperature of each battery cluster in the battery system is first obtained. The cluster temperature can represent an overall temperature condition of each battery cluster, and temperature control is then further performed on each battery cluster according to the cluster temperature of each battery cluster. This is beneficial for implementing inter-cluster temperature uniformity among the plurality of battery clusters in the battery system, solving a problem of non-uniform impedance and current in the battery clusters caused by inconsistent inter-cluster temperatures, reducing a situation that the battery clusters are fully charged or discharged in advance during charging, and improving energy conversion efficiency of the battery system, thus improving operation performance of the battery system in which the plurality of battery clusters are included.

### BRIEF DESCRIPTION OF DRAWINGS

In order to illustrate the technical solutions of the embodiments of the present application more clearly, the following briefly introduces the accompanying drawings required in the embodiments of the present application. Obviously, the accompanying drawings described below are only some embodiments of the present application. Those of ordinary skill in the art can also obtain other drawings according to the drawings without any creative work.
FIG. 1 is a schematic structural block diagram of a system according to an embodiment of the present application;
FIG. 2 is a schematic flow block diagram of a battery system temperature control method according to an embodiment of the present application;
FIG. 3 is a schematic flow block diagram of another battery system temperature control method according to an embodiment of the present application;
FIG. 4 is a schematic flow block diagram of another battery system temperature control method according to an embodiment of the present application;
FIG. 5 is a schematic flow block diagram of another battery system temperature control method according to an embodiment of the present application;
FIG. 6 is a schematic flow block diagram of another battery system temperature control method according to an embodiment of the present application;
FIG. 7 is a schematic flow block diagram of another battery system temperature control method according to an embodiment of the present application;
FIG. 8 is a schematic structural block diagram of a temperature control apparatus according to an embodiment of the present application;
FIG. 9 is a schematic structural block diagram of another temperature control apparatus according to an embodiment of the present application; and
FIG. 10 is a schematic structural block diagram of a battery system according to an embodiment of the present application.

In the accompanying drawings, the accompanying drawings are not drawn to an actual scale.

### DETAILED DESCRIPTION

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third", and the like are only for the purpose of description, and may not be understood as indicating or implying the relative importance.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used in the present application have the same meaning as commonly understood by those skilled in the art to which the present application belongs. The terms used in the applied specification of present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

The present application relates to the field of batteries, and in particular, to a battery system including a plurality of battery clusters. The battery cluster is a battery combination formed by connecting batteries in series, in parallel, or in parallel-series connection. The parallel-series connection means mixing of serial connection and parallel connection. For example, the battery cluster in the present application may be formed by connecting a plurality of batteries in series or in parallel. For another example, the battery cluster in the present application may be formed by connecting a plurality of batteries in parallel first and then in series. A plurality of battery clusters may be connected in series or in parallel to form a battery system. The battery system can be applied to an energy storage system or a power system, to increase an energy storage capacity of the energy storage system or to increase driving power of the power system. In some related arts, the battery cluster may also be referred to as a battery group, a battery pack, or another name.

In the present application, a battery means a single physical module including one or more battery cells to provide electrical energy. When the battery includes a plurality of battery cells, the plurality of battery cells may be connected in series and/or in parallel to form the battery. The specific series and parallel connection way is as described above and will not be elaborated here. Optionally, in the present application, the battery may be a lithium-ion battery, a lithium-metal battery, a lead-acid battery, a nickel-cadmium battery, a nickel-hydride battery, a lithium-sulfur battery, a lithium-air battery, a sodium-ion battery, a magnesium-ion battery, or the like. The present application does not make a specific limitation on this.

During operation of the battery system including the plurality of battery clusters, for example, during charging or discharging of the battery system, the batteries in each battery cluster may generate high heat, and the heat between adjacent battery clusters may be conducted to each other. If no good thermal management can be provided for the plurality of battery clusters, the operation performance of the battery system can be affected, and safety problems such as thermal runaway and explosion are easily caused. In addition, during the operation of the battery system, if an environment in which the battery system is located has a low temperature, capacities and output power of the batteries in the battery clusters may be affected, thereby affecting the operation performance and life of the battery system.

In order to solve the above related problems caused by temperature impact, in some related arts, a temperature management system may be configured in the energy storage system or the power system, or the temperature management system may also be referred to as a thermal management system (TMS). The TMS may be configured to perform temperature management on the plurality of battery clusters, thereby performing temperatures regulation on the batteries in the plurality of battery clusters, so that the batteries in the plurality of battery clusters are within a relatively stable temperature range. Optionally, the TMS may be an air-cooled thermal management system, a liquid-cooled thermal management system, a phase-change thermal management system, or the like. The present application does not impose a limitation on a specific type of the TMS.

Based on the TMS, the related art provides some temperature management strategies for the batteries in the plurality of battery clusters. For example, temperature regulation is performed on a battery with a highest or minimum temperature in the plurality of battery clusters, so that a difference between a maximum temperature value and a minimum temperature value of the battery in the plurality of battery clusters is maintained within a preset range. In this technical solution, it is only effective for temperature uniformity between the batteries. However, a temperature difference between the battery clusters may increase due to superposition of temperature differences of single batteries, which then causes non-uniform impedance and current in the clusters, affecting charging or discharging capacities of the battery clusters and causing loss of partial power, thereby affecting operation performance of the battery clusters.

In view of this, the present application provides a new battery system temperature control method, including: obtaining a cluster temperature of each of a plurality of battery clusters of a battery system; and performing temperature control on each battery cluster according to the cluster temperature of each battery cluster. According to the temperature control method, the cluster temperature of each battery cluster in the battery system is first obtained. The cluster temperature can represent an overall temperature condition of each battery cluster, and temperature control is then further performed on each battery cluster according to the cluster temperature of each battery cluster. This is beneficial for implementing inter-cluster temperature uniformity among the plurality of battery clusters, solving a problem of non-uniform impedance and current in the battery clusters caused by inconsistent inter-cluster temperatures, reducing a situation that the battery clusters are fully charged or discharged in advance during charging, and improving energy conversion efficiency of the battery system, thus improving operation performance of the battery system in which the plurality of battery clusters are included.

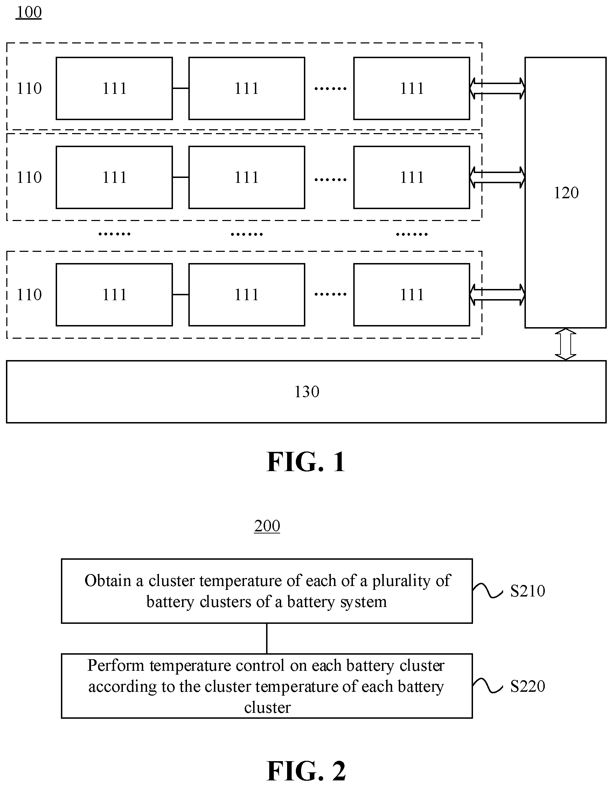

FIG. 1 shows a schematic structural block diagram of a system 100 to which an embodiment of the present application is applicable.

As shown in FIG. 1, the system 100 may include: a plurality of battery clusters 110, a battery management system (BMS) 120, and a thermal management system (TMS) 130.

Each of the plurality of battery clusters 110 may include at least one battery 111. The batteries 111 in each battery cluster 110 may be connected in series, in parallel, or in parallel-series connection. The plurality of battery clusters 110 may be connected in parallel to each other to form a battery system. Generally, a quantity of batteries in each of the plurality of battery clusters 110 is equal, so that electrical parameters of the plurality of battery clusters 110 are balanced, circulation between the battery clusters 110 is reduced, and a capacity and operation performance of the battery system are improved.

The BMS 120 may be configured to intelligently manage and maintain each battery 111 in the plurality of battery clusters 110, monitor a state of the battery 111, prevent overcharging and overdischarging of the battery 111, and prolong the service life of the battery 111. Specifically, the BMS 120 may monitor an operation state and related operation parameters, such as current, voltage, and temperature, of each battery in the battery clusters 110, and calculate more electrical parameters, such as a state of charge (SOC) and a state of health (SOH), characterizing a state of the battery 111 according to the operation parameters. Through the BMS 120, charging and discharging of the batteries 111 in the plurality of battery clusters 110 can be well controlled, and different handling measures can be taken according to different conditions of the batteries 111, thereby playing a good management role in the battery system.

The TMS 130 may implement a thermal management function on the plurality of battery clusters 110, and solve a problem of thermal runaway caused by the fact that the batteries 111 in the battery clusters 110 work at a too high or too low temperature. The TMS 130 may include a temperature control unit and a temperature regulation unit. The temperature regulation unit may provide a temperature regulation carrier (e.g.: air or liquid) to flow through each battery 111 in the battery clusters 110, thereby regulating temperatures of the battery clusters 110. The temperature control unit may be connected to the temperature regulation unit to control an operation state of the temperature regulation unit.

In a case that the TMS 130 is the air-cooled thermal management system, the TMS 130 may include a fan (i.e., the above temperature regulation unit is a fan), and a temperature regulation function of the battery clusters 110 is achieved by controlling turning on and a rotation speed of the fan. In a case that the TMS 130 is the liquid-cooled thermal management system, the TMS 130 may include a water-cooled plate, a water-cooled pipe, or the like (i.e., the above temperature regulation unit is a water-cooled structure), and a temperature regulation function of the battery clusters 110 is achieved by controlling a temperature of liquid in the water-cooled plate or the water-cooled pipe. Certainly, the present application does not impose a limitation on a specific temperature regulation mode of the TMS. In other alternative implementations, the TMS 130 may further include other types of temperature regulation apparatuses. A specific implementation solution can be found in the description of the relevant art, and details will be omitted here.

In this embodiment of the present application, a communication connection may be established between the BMS 120 and the TMS 130. The TMS 130 may receive relevant information and commands that are sent by the BMS 120, thereby regulating its own temperature regulation mode to achieve effective regulation on the temperatures of the battery clusters 110.

In some implementations, there may be a plurality of TMSs 130 in the system 100, and the plurality of TMSs 130 may be in one-to-one correspondence to the plurality of battery clusters 110, thereby facilitating independent temperature control on the plurality of battery clusters 110.

The above system 100 may be an energy storage system or a power system. For example, the energy storage system includes: an energy storage cabinet, an energy storage container, an energy storage power station, and the like. For another example, the power system may include: a power battery system, and the like.

It can be understood that in a case that the system 100 is the energy storage system or the power system, the system 100 may include other system structures of the energy storage system or the power system in addition to the plurality of battery clusters 110, the BMS 120, and the TMS 130 that are shown in FIG. 1. For example, in a case that the system 100 is an energy storage system, the system 100 may further include: a power conversion system (PCS), an energy management system (EMS), and the like.

FIG. 2 shows a schematic flow block diagram of a battery system temperature control method 200 according to an embodiment of the present application. Optionally, the temperature control method 200 may be used for performing temperature control on a battery system formed by the plurality of battery clusters 110 shown in FIG. 1 above.

As shown in FIG. 2, the battery system temperature control method 200 may include the following steps:
S210: Obtain a cluster temperature of each of a plurality of battery clusters of a battery system.
S220: Perform temperature control on each battery cluster according to the cluster temperature of each battery cluster.

Optionally, in this embodiment of the present application, the plurality of battery clusters of the battery system may be all the battery clusters in the battery system, or may be part of the battery clusters in the battery system.

Optionally, the cluster temperature of each battery cluster may be used for characterizing an overall temperature condition of each battery cluster. In some examples, the cluster temperature of the battery cluster may include a mean temperature of the battery cluster. The mean temperature of the battery cluster may be a mean temperature of all or part of the batteries in the battery cluster. For example, the mean temperature of the battery cluster may be a mean temperature value of a plurality of batteries at specific positions in the battery cluster, or the mean temperature of the battery cluster may be a mean temperature value of all batteries in the battery cluster. In addition to the mean temperature of the battery cluster, in other examples, the cluster temperature of the battery cluster may further include another temperature value, such as a maximum temperature value, a minimum temperature value, or the like of the batteries in the battery cluster.

According to the technical solutions of the embodiments of the present application, the cluster temperature of each battery cluster in the battery system is first obtained. The cluster temperature can represent an overall temperature condition of each battery cluster, and temperature control is then further performed on each battery cluster according to the cluster temperature of each battery cluster. This is beneficial for implementing inter-cluster temperature uniformity among the plurality of battery clusters in the battery system, solving a problem of non-uniform impedance and current in the battery clusters caused by inconsistent inter-cluster temperatures, reducing a situation that the battery clusters are fully charged or discharged in advance during charging, and improving energy conversion efficiency of the battery system, thus improving operation performance of the battery system in which the plurality of battery clusters are included.

In some implementations, an executive body the above temperature control method 200 and temperature control methods in the following embodiments may be the BMS 120 shown in FIG. 1 described above. In this implementation, the BMS may obtain a cluster temperature of each of a plurality of battery clusters of the battery system, and perform temperature control on each battery cluster according to the cluster temperature of each battery cluster.

Optionally, the BMS may send a temperature control command to a temperature regulation apparatus (e.g., the TMS 130 shown in FIG. 1) corresponding to each battery cluster according to the cluster temperature of each battery cluster, to cause the temperature regulation apparatus to perform temperature control on each battery cluster according to the temperature control command. As an example, the temperature control command may include a preset control temperature, and the temperature regulation apparatus may perform temperature regulation on the battery cluster according to the preset control temperature.

In some implementations, a fluid is accommodated in the temperature regulation apparatus, and the fluid is configured to regulate a temperature of each battery cluster. In this embodiment, the temperature regulation apparatus may be a liquid-cooled temperature regulation apparatus, which may include a water-cooling plate or a water-cooling pipe, and the water-cooling plate or the water-cooling pipe may be attached to or close to the battery cluster to regulate the temperature of the battery cluster.

Through the technical solution of this implementation, the BMS, as a main management unit in the battery system, can obtain multi-aspect information of the plurality of battery clusters in the battery system, and the BMS is used to control the temperature regulation apparatuses to perform temperature control on the plurality of battery clusters. The overall technical solution is easily implemented and has high reliability, which is conducive to comprehensively improving the overall performance of the battery system.

Further, in a case that the temperature regulation apparatus is a liquid-cooled temperature regulation apparatus, the liquid-cooled temperature regulation apparatus can implement relatively uniform and effective temperature regulation on the plurality of battery clusters. Compared with a scene in which temperature regulation uniformity of an air-cooled temperature regulation apparatus (such as a fan) is poor, the technical solution of this implementation can further enhance a temperature regulation effect on the plurality of battery clusters in the battery system.

Optionally, the cluster temperature of each battery cluster includes: a mean temperature of each battery cluster. The mean temperature of each battery cluster is a mean temperature value of the batteries in each battery cluster. In step S220 above, a target mean temperature of the plurality of battery clusters may be first determined based on the mean temperature of each battery cluster, and then the temperature control may be performed on each battery cluster according to a difference between the mean temperature of each battery cluster and the target mean temperature. The target mean temperature is a maximum value, a minimum value, or a mean value among the mean temperatures of the plurality of battery clusters.

In this implementation, the BMS may perform temperature control on each battery cluster according to a difference between the mean temperature of each battery cluster and a target mean temperature. The target mean temperature may represent an overall temperature condition of all the battery clusters in the battery system. For example, when the target mean temperature is the maximum value among the mean temperatures of the plurality of battery clusters, the difference between the mean temperature of each battery cluster and the target mean temperature may represent whether each battery cluster is a high-temperature battery cluster in the plurality of battery clusters, thereby facilitating effective temperature regulation on each battery cluster.

Through the technical solution of this implementation, the target mean temperature determined based on the mean temperature of each of the plurality of battery clusters can change along with an overall temperature change of the plurality of battery clusters. Therefore, the temperature control is performed on each battery cluster according to the mean temperature of each battery cluster and the target mean temperature. This can achieve more accurate and effective temperature control on each battery cluster in the battery system and maintain inter-cluster temperature uniformity, to further improve overall performance of the battery system.

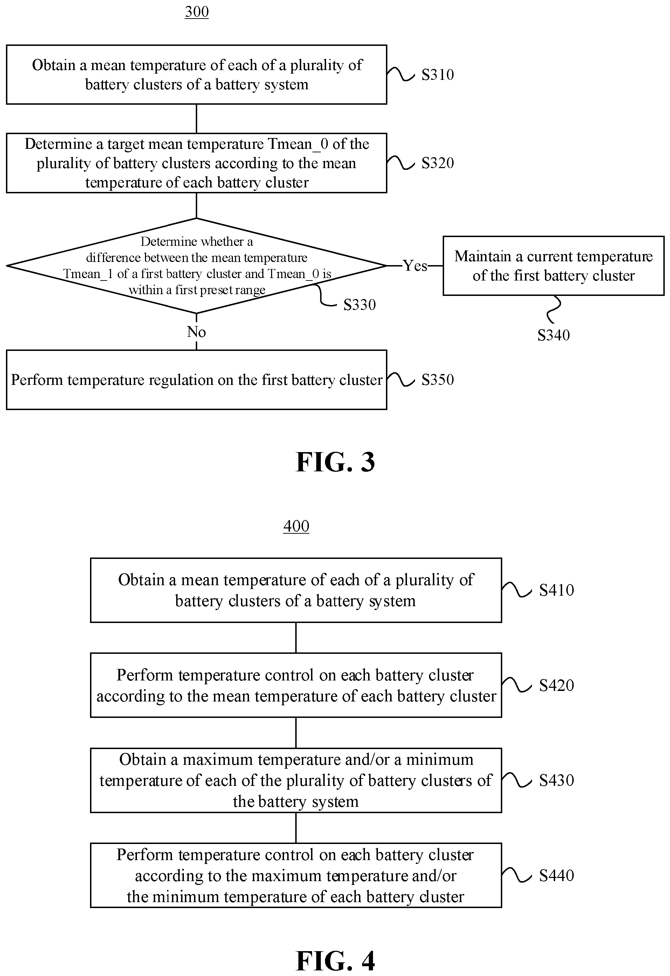

FIG. 3 shows a schematic flow block diagram of another temperature control method 300 according to an embodiment of the present application.

As shown in FIG. 3, the temperature control method 300 may include the following steps:
S310: Obtain a mean temperature of each of a plurality of battery clusters of a battery system.
S320: Determine a target mean temperature Tmean_0 of the plurality of battery clusters according to the mean temperature of each battery cluster.
S330: Determine whether a difference between a mean temperature Tmean_1 of a first battery cluster in the plurality of battery clusters and the target mean temperature Tmean_0 is within a first preset range.
S340: If the difference is within the first preset range, maintain a current temperature of the first battery cluster.
S350: If the difference is not within the first preset range, perform temperature regulation on the first battery cluster.

Specifically, in this embodiment of the present application, the first battery cluster may be any one of the plurality of battery clusters. As an illustration, the mean temperature of the first battery cluster is written as Tmean_1.

Optionally, in step S330, the BMS may sequentially determine whether a difference between the mean temperature of each of the plurality of battery clusters and the target mean temperature is within a first preset range. For example, the BMS may determine whether a difference between a mean temperature Tmean_1 of a first battery cluster in the plurality of battery clusters and the target mean temperature Tmean_0 is within the first preset range.

In some implementations, the BMS may determine whether an absolute value of the difference between the mean temperature Tmean_1 of the first battery cluster in the plurality of battery clusters and the target mean temperature Tmean_0 is less than a first preset temperature Th1. In this case, the first preset range may be [-Th1, Th1], and the first preset temperature Th1 is a positive value.

In step S340, if the difference between the mean temperature Tmean_1 of the first battery cluster and the target mean temperature Tmean_0 is within the first preset range, the BMS may maintain a current temperature of the first battery cluster.

Optionally, in this embodiment of the present application, each of the plurality of battery clusters may correspond to a temperature regulation apparatus. For example, each battery cluster may correspond to a TMS. In a case that the difference between the mean temperature Tmean_1of the first battery cluster and the target mean temperatureTmean_0is within the first preset range, the BMS may send a dormancy command or a self-circulation command to a first temperature regulation apparatus corresponding to the first battery cluster, so that the first temperature regulation apparatus enters a dormant state or a self-circulation state, thereby enabling the first battery cluster to maintain its current temperature.

For example, the first temperature regulation apparatus may be a water cooling apparatus corresponding to the first battery cluster. In the dormant state, the first temperature regulation apparatus may stop operation. That is, the water circulation in the water cooling apparatus is stopped. In the self-circulation state, the first temperature regulation apparatus operates in a self-circulation manner. That is, water in the water cooling apparatus is self-circulating.

In step S350, in a case that the difference between the mean temperature Tmean_1 of the first battery cluster in the plurality of battery clusters and the target mean temperature Tmean_0 is beyond the first preset range, the BMS may perform temperature regulation on the first battery cluster.

Optionally, in a case that each of the plurality of battery clusters has its own temperature regulation apparatus, if the difference between the mean temperatureTmean_1of the first battery cluster and the target mean temperature Tmean_0 is beyond the first preset range, the BMS may send a temperature control command to a first temperature regulation apparatus corresponding to the first battery cluster, so that the first temperature regulation apparatus enters a temperature regulation state, thereby performing temperature regulation on the first battery cluster.

For example, the first temperature regulation apparatus may be a water cooling apparatus corresponding to the first battery cluster. In the temperature regulation state, the BMS may control and regulate a temperature of water in the water cooling apparatus, for example, heat or further cool the water.

Through the technical solution of this embodiment of the present application, the temperature control or temperature maintenance on any battery cluster can be achieved directly based on whether the difference between any battery cluster (i.e., the first battery cluster) in the plurality of battery clusters and the target mean temperature is within the first preset range, to reduce an inter-cluster temperature difference of the plurality of battery clusters. This technical solution is easily implemented and has high reliability, which is conducive to further improving the overall performance of the battery system.

Optionally, in some implementations, in a case that the difference between the mean temperature Tmean_1 of the first battery cluster in the plurality of battery clusters and the target mean temperature Tmean_0 is beyond the first preset range, the BMS may perform temperature regulation on the first battery cluster, so that a difference between the mean temperature Tmean_1 of the first battery cluster and a mean temperature of another battery cluster in the plurality of battery clusters is within a second preset range.

Optionally, the second preset range may be within the first preset range. That is, a minimum value of the second preset range is greater than or equal to a minimum value of the first preset range, and the maximum value of the second preset range is less than or equal to a maximum value of the first preset range.

Through the technical solution of this implementation, the temperature regulation can be performed on the first battery cluster, so that an inter-cluster temperature difference between the first battery cluster and another battery cluster in the plurality of battery clusters is within the smaller second preset range, thereby effectively reducing the inter-cluster temperature difference between the first battery cluster and the another battery cluster, to improve performance of the battery system.

Optionally, in some implementations, the BMS may control a regulation temperature of the first temperature regulation apparatus corresponding to the first battery cluster to be the target mean temperature Tmean_0, and the first temperature regulation apparatus is configured to perform temperature regulation on the first battery cluster, so that the difference between the mean temperature Tmean_1 of the first battery cluster and the target mean temperature Tmean_0 is within the second preset range.

In this implementation, the BMS may send a temperature regulation command to the first temperature regulation apparatus corresponding to the first battery cluster, so that the first temperature regulation apparatus enables a cooling mode or a heating mode. The temperature regulation command may include a preset control temperature, i.e., the target mean temperature Tmean_0, for the first temperature regulation apparatus.

In an example, the target mean temperatureTmean_0 may be a maximum value among the mean temperatures of the plurality of battery clusters. In a case that the difference between the mean temperature Tmean_1 of the first battery cluster and the target mean temperature Tmean_0 is beyond the first preset range, the temperature of the first battery cluster is low, and the BMS may send a heating command to the first temperature regulation apparatus, so that the first temperature regulation apparatus enables the heating mode. In the heating command, a control temperature set in advance for the first temperature regulation apparatus is Tmean_0, which is the maximum value among the mean temperatures of the plurality of battery clusters.

In another example, the target mean temperature Tmean_0 may be a minimum value among the mean temperatures of the plurality of battery clusters. In a case that the difference between the mean temperature Tmean_1 of the first battery cluster and the target mean temperature Tmean_0 is beyond the first preset range, the temperature of the first battery cluster is high, and the BMS may send a cooling command to the first temperature regulation apparatus, so that the first temperature regulation apparatus enables the cooling mode. In the cooling command, a control temperature set in advance for the first temperature regulation apparatus is Tmean_0, which is the minimum value among the mean temperatures of the plurality of battery clusters.

In the above implementation, the first temperature regulation apparatus regulates the temperature of the first battery cluster by using the target mean temperatureTmean_0, so that the difference between the mean temperature Tmean_1 of the first battery cluster and the target mean temperature Tmean_0 is within the second preset range.

Optionally, in some examples, the above second preset range may be the same as the first preset range. In this example, after the BMS executes step S350 to perform temperature regulation on the first battery cluster, the BMS may then execute step S310 to step S330 until the difference between the mean temperature Tmean_1 of the first battery cluster and the target mean temperature Tmean_0 is within the first preset range.

Optionally, the above first preset range may be between -5°C and 5°C (°C represents degrees Celsius). Further, the first preset range may be between -2°C and 2°C.

Through the technical solution of this implementation, the regulation temperature of the first temperature regulation apparatus corresponding to the first battery cluster can be controlled to be the target mean temperature, so that the first temperature regulation apparatus can effectively and accurately regulate the temperature of the first battery cluster based on the target mean temperature, and the mean temperature of the first battery cluster can be close to the target mean temperature and maintained within a specific threshold range, which effectively reduces the inter-cluster temperature difference between the first battery cluster and another battery cluster and improving the overall performance of the battery system.

In some embodiments, in addition to the mean temperature of each battery cluster, the cluster temperature of each battery cluster may further include: a maximum temperature and/or a minimum temperature of each battery cluster. The maximum temperature of each battery cluster is a maximum temperature value of the batteries in each battery cluster, and the maximum temperature of each battery cluster is a minimum temperature value of the batteries in each battery cluster.

In this case, FIG. 4 shows a schematic flow block diagram of another temperature control method 400 according to an embodiment of the present application.

As shown in FIG. 4, the temperature control method 400 may include the following steps:
S410: Obtain a mean temperature of each of a plurality of battery clusters of a battery system, where the mean temperature of each battery cluster is a mean temperature value of batteries in each battery cluster.
S420: Perform temperature control on each battery cluster according to the mean temperature of each battery cluster.
S430: Obtain a maximum temperature and/or a minimum temperature of each of the plurality of battery clusters of the battery system.
S440: Perform temperature control on each battery cluster according to the maximum temperature and/or the minimum temperature of each battery cluster.

Specifically, in this embodiment, step S410 and step S420 may be found in the relevant descriptions of the above embodiment.

In step S430 and step S440, the BMS may obtain a maximum temperature and/or a minimum temperature of each of the plurality of battery clusters, and perform temperature control on each battery cluster according to the maximum temperature and/or the minimum temperature. The maximum temperature of each battery cluster is a maximum temperature value of the batteries in each battery cluster, and the maximum temperature of each battery cluster is a minimum temperature value of the batteries in each battery cluster.

Through the technical solution of this embodiment, the temperature control can be performed on each battery cluster both according to the mean temperature of each of the plurality of battery clusters and according to the maximum temperature and/or the minimum temperature of each battery cluster, which is conducive to performing further fine regulation on the temperature of each battery cluster, so that higher uniformity is maintained for the temperatures between the batteries inside each battery cluster.

Optionally, through step S410 and step S420, a difference between the mean temperature of each of the plurality of battery clusters and the target mean temperature may be controlled within a first preset range, and then step S430 and step S440 are executed. That is, in this implementation, in a case that the difference between the mean temperature of each of the plurality of battery clusters and the target mean temperature is within the first preset range, temperature control is performed on each battery cluster according to the maximum temperature and/or the minimum temperature of each battery cluster, where the target mean temperature is a maximum value, a minimum value, or a mean value among the mean temperatures of the plurality of battery clusters.

Through the technical solution of this implementation, the mean temperature of each of the plurality of battery clusters is first controlled within a particular range, so that the plurality of battery clusters can achieve an inter-cluster balance, and it is easy to subsequently perform fine temperature control on each battery cluster according to the maximum temperature and/or the minimum temperature of each battery cluster, thereby improving temperature regulation efficiency and regulation effect on the plurality of battery clusters.

Optionally, in some implementations of the embodiments of the present application, step S430 and step S440 may be executed after step S340 and step S350 of the embodiment shown in FIG. 3. Specifically, after the BMS performs temperature control on the first battery cluster. After the difference between the mean temperature Tmean_1 of the first battery cluster and the target mean temperature Tmean_0 is within the second preset range or the current temperature is maintained, the BMS may perform temperature control on another battery cluster in the plurality of battery clusters in this way, so that the difference between the mean temperature of each of the plurality of battery clusters and the target mean temperature is within the first preset range. Then, step S430 and step S440 may be further executed, namely, performing further temperature control on each battery cluster according to the maximum temperature and/or the minimum temperature of each battery cluster.

Optionally, in some other implementations of the embodiments of the present application, step S430 and step S440 may alternatively be executed after step S350 of the embodiment shown in FIG. 3. The embodiment shown in FIG. 3 does not include step S340. Specifically, in a case that the difference between the mean temperature Tmean_1 of the first battery cluster and the target mean temperatureTmean_0 is within the first preset range, step S340 may not be executed. After the temperature control is performed on another battery cluster in the plurality of battery clusters in this way, step S430 and step S440 in this embodiment of the present application are then executed.

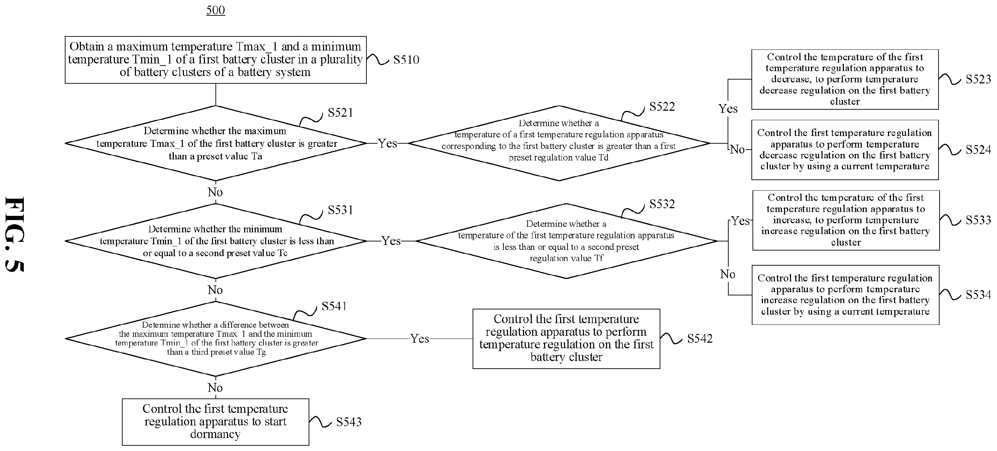

Based on the embodiment shown in FIG. 4 above, FIG. 5 shows a schematic flow block diagram of another temperature control method 500 according to an embodiment of the present application. The temperature control method 500 is mainly used for performing temperature control on each battery cluster according to a maximum temperature and a minimum temperature of each of a plurality of battery clusters.

As shown in FIG. 5, the temperature control method 500 may include the following steps:
S510: Obtain a maximum temperature Tmax_1 and a minimum temperature Tmin_1 of a first battery cluster in a plurality of battery clusters of a battery system.
S521: Determine whether the maximum temperature Tmax_1 of the first battery cluster is greater than a first preset value Ta.
S522: If the maximum temperature Tmax_1 of the first battery cluster is greater than the first preset value Ta, determine whether a regulation temperature of a first temperature regulation apparatus corresponding to the first battery cluster is greater than a first preset regulation value Td.
S523: If the regulation temperature of the first temperature regulation apparatus is greater than first preset regulation value Td, control the regulation temperature of the first temperature regulation apparatus to decrease, to perform temperature decrease regulation on the first battery cluster.
S524: If the regulation temperature of the first temperature regulation apparatus is less than or equal to the first preset regulation value Td, control the first temperature regulation apparatus to perform temperature decrease regulation on the first battery cluster by using a current regulation temperature.

Specifically, in step S510, the BMS may sequentially obtain a maximum temperature and a minimum temperature of each battery cluster in a battery system. For example, the BMS may obtain a maximum temperature Tmax_1 and a minimum temperature Tmin_1 of a first battery cluster in the battery system.

In step S521, the BMS may sequentially determine whether the maximum temperature of each battery cluster in the battery system is greater than a first preset value Ta. For example, the BMS may determine whether the maximum temperature Tmax_1 of the first battery cluster in the battery system is greater than the first preset value Ta. In a case that the maximum temperature Tmax_1 of the first battery cluster is greater than the first preset value Ta, it indicates that the first battery cluster includes a battery with a high temperature, and thus temperature decrease regulation needs to be performed on the first battery cluster. In a case that the maximum temperature Tmax_1 of the first battery cluster is less than or equal to the first preset value Ta, the BMS may control the temperature regulation on the first battery cluster to be closed. For example, the BMS controls the first temperature regulation apparatus corresponding to the first battery cluster to start dormancy.

Optionally, in addition to determining whether the maximum temperature Tmax_1 of the first battery cluster in the battery system is greater than the first preset value Ta, the BMS also determines whether the minimum temperature Tmin_1 of the first battery cluster is greater than another preset value Tb. The another preset value Tb is greater than the first preset value Ta. In a case that the maximum temperature Tmax_1 of the first battery cluster is greater than the first preset value Ta and the minimum temperature Tmin_1 of the first battery cluster is greater than the another preset value Tb, the BMS may perform temperature decrease regulation on the first battery cluster. In this implementation, the BMS can learn an overall temperature distribution of the first battery cluster by combining the maximum temperatureTmax_1 and the minimum temperature Tmin_1 of the first battery cluster, so that it is convenient for the BMS to implement more accurate temperature regulation and control on the first battery cluster.

In some implementations, in a case that the maximum temperature Tmax_1 of the first battery cluster is greater than the first preset value Ta, or in a case that the maximum temperature Tmax_1 of the first battery cluster is greater than the first preset value Ta and the minimum temperature Tmin_1 of the first battery cluster is greater than the another preset value Tb, the BMS may further obtain a regulation temperature of the first temperature regulation apparatus corresponding to the first battery cluster, and perform temperature decrease regulation on the first battery cluster according to the regulation temperature of the first temperature regulation apparatus.

For example, referring to step S522 to step S524, the BMS may determine whether the regulation temperature of the first temperature regulation apparatus corresponding to the first battery cluster is greater than the first preset regulation value Td. In a case that the regulation temperature of the first temperature regulation apparatus is greater than the first preset regulation value Td, it indicates that the first temperature regulation apparatus cannot implement good and effective temperature regulation on the first battery cluster by using the current regulation temperature. In view of this, in a case that the regulation temperature of the first temperature regulation apparatus is greater than the first preset regulation value Td, the BMS may control the regulation temperature of the first temperature regulation apparatus to decrease, to perform the temperature decrease regulation on the first battery cluster; or, in a case that the regulation temperature of the first temperature regulation apparatus is less than or equal to the first preset regulation value Td, the BMS may control the first temperature regulation apparatus to perform the temperature decrease regulation on the first battery cluster by using the current regulation temperature.

In an example, in a case that the first temperature regulation apparatus is a water cooling apparatus corresponding to the first battery cluster, in step S523, the BMS may control a temperature of water in the water cooling apparatus to decrease, to implement the temperature decrease regulation on the first battery cluster. In step S524, the BMS may start self-circulation of the water cooling apparatus, and the water cooling apparatus performs the temperature decrease regulation on the first battery cluster by using a current water cooling temperature.

Optionally, in the above application embodiment, both the first preset value Ta and the first preset regulation value Td may be preset values set according to actual needs. The first preset value Ta may be determined according to a preferred temperature threshold of a battery. As an example but not a limitation, the first preset value Ta may be greater than 20°C. For example, the first preset value Ta may be between 20°C and 30°C. The first preset regulation value Td may be less than the first preset value Ta. As an example but not a limitation, the first preset regulation value Td may be between Ta minus 9°C and Ta minus 11°C.

Optionally, in a case that the BMS controls the regulation temperature of the first temperature regulation apparatus to decrease, to perform the temperature decrease regulation on the first battery cluster, the BMS may send a cooling command to the first temperature regulation apparatus. The cooling command may include a preset low temperature, and the preset temperature Tset is less than a current regulation temperature Tcurrent of the first temperature regulation apparatus. As an example but not a limitation, the preset temperature Tset may be between Tcurrent minus 3°C and Tcurrent minus 5°C.

In a case that the BMS controls the first temperature regulation apparatus to perform temperature decrease regulation on the first battery cluster by using the current regulation temperature, the BMS may send a self-circulation command to the first temperature regulation apparatus. The self-circulation command may include the current regulation temperature Tcurrent of the first temperature regulation apparatus, and the first temperature regulation apparatus starts self-circulation according to the received self-circulation command.

Through the technical solution of this embodiment of the present application, based on obtaining the maximum temperature of the first battery cluster, the regulation temperature of the first temperature regulation apparatus corresponding to the first battery cluster is further obtained, and the current temperature state of the first temperature regulation apparatus is fully used to perform the temperature decrease regulation on the first battery cluster, thereby reducing a possibility of real-time operation of the first temperature regulation apparatus and reducing operation power consumption of the first temperature regulation apparatus.

Further, in some implementations of the above technical solution, different temperature decrease regulation modes of the first temperature regulation apparatus may be controlled according to the regulation temperature of the first temperature regulation apparatus and the first preset regulation value. The technical solution of this implementation is easily implemented and has high reliability, which is conducive to performing effective temperature decrease regulation on the first battery cluster.

Continuing to refer to FIG. 5, the temperature control method 500 may further include the following steps.

S531: Determine whether the minimum temperature Tmin_1 of the first battery cluster is less than or equal to a second preset value Tc.

S532: If the minimum temperature Tmin_1 of the first battery cluster is less than or equal to the second preset value Tc, determine whether the regulation temperature of the first temperature regulation apparatus corresponding to the first battery cluster is less than or equal to a second preset regulation value Tf.

S533: If the regulation temperature of the first temperature regulation apparatus is less than or equal to the second preset regulation value Tf, control the regulation temperature of the first temperature regulation apparatus to increase, to perform temperature increase regulation on the first battery cluster.

S534: If the regulation temperature of the first temperature regulation apparatus is greater than the second preset regulation value Tf, control an n-th temperature regulation apparatus to perform temperature increase regulation on the first battery cluster by using a current regulation temperature.

Optionally, in some implementations, as shown in FIG. 5, step S531 may be executed after step S521. That is, step S531 may be executed in a case that the maximum temperature Tmax_1 of the first battery cluster is less than or equal to the first preset value Ta. Alternatively, in some other implementations, step S531 may alternatively be executed before step S521. That is, the BMS first determines whether the minimum temperature Tmin_1 of the first battery cluster in the plurality of battery clusters is less than or equal to the second preset value Tc, and executes step S521 in a case that the minimum temperature Tmin_1 of the first battery cluster is greater than the second preset value Tc.

In step S531, the BMS may sequentially determine whether the minimum temperature of each battery cluster in the battery system is less than or equal to the second preset value Tc. For example, the BMS may determine whether the minimum temperature Tmin_1 of the first battery cluster in the battery system is less than or equal to the second preset value Tc. In a case that the minimum temperature Tmin_1 of the first battery cluster in the battery system is less than or equal to the second preset value Tc, it indicates that the first battery cluster includes a battery with a low temperature, and thus temperature increase regulation needs to be performed on the first battery cluster. In a case that the minimum temperature Tmin_1 of the first battery cluster is greater than the second preset value Ta, the BMS may control the temperature regulation on the first battery cluster to be closed. For example, the BMS controls the first temperature regulation apparatus corresponding to the first battery cluster to start dormancy.

In some implementations, in a case that the minimum temperature Tmin_1 of the first battery cluster is less than or equal to the second preset value Tc, the BMS may further obtain the regulation temperature of the first temperature regulation apparatus corresponding to the first battery cluster, and perform temperature increase regulation on the first battery cluster according to the regulation temperature of the first temperature regulation apparatus.

For example, referring to step S532 to step S534, the BMS may determine whether the regulation temperature of the first temperature regulation apparatus corresponding to the first battery cluster is less than or equal to the second preset regulation value Tf. In a case that the regulation temperature of the first temperature regulation apparatus is less than or equal to the first preset regulation value Tf, it indicates that the current regulation temperature of the first temperature regulation apparatus is low and a good effective temperature increase effect cannot be achieved on the first battery cluster by using the current regulation temperature. In view of this, in a case that the regulation temperature of the first temperature regulation apparatus is less than or equal to the second preset regulation value Tf, the BMS may control the regulation temperature of the first temperature regulation apparatus to increase, to perform the temperature increase regulation on the first battery cluster; or, in a case that the regulation temperature of the first temperature regulation apparatus is greater than the second preset regulation value Tf, the BMS may control the first temperature regulation apparatus to perform the temperature increase regulation on the first battery cluster by using the current regulation temperature.

In an example, in a case that the first temperature regulation apparatus is a water cooling apparatus corresponding to the first battery cluster, in step S533, the BMS may control a temperature of water in the water cooling apparatus to increase, to implement the temperature increase regulation on the first battery cluster. In step S534, the BMS may start self-circulation of the water cooling apparatus, and the water cooling apparatus performs the temperature increase regulation on the first battery cluster by using a current water cooling temperature.

Optionally, in the above application embodiment, both the second preset value Tc and the second preset regulation value Tf may be preset values set according to actual needs. The second preset value Tc may be determined according to a preferred temperature threshold of a battery. The second preset value Tc may be less than the above first preset value Ta. As an example but not a limitation, the second preset temperature Tc may be between Ta minus 3°C and Ta minus 5°C. The second preset regulation value Tf may be greater than the second preset value Tc. As an example but not a limitation, the second preset regulation value Tf may be between Tc plus 14°C and Tc plus 16°C.

Optionally, in a case that the BMS controls the regulation temperature of the first temperature regulation apparatus to increase, to perform the temperature increase regulation on the first battery cluster, the BMS may send a heating command to the first temperature regulation apparatus. The heating command may include a preset high temperature, and the preset temperature Tset is less than a current regulation temperature Tcurrent of the first temperature regulation apparatus. As an example but not a limitation, the preset temperature Tset may be between Tcurrent plus 3°C and Tcurrent plus 5°C.

In a case that the BMS controls the first temperature regulation apparatus to perform temperature increase regulation on the first battery cluster by using the current regulation temperature, the BMS may send a self-circulation command to the first temperature regulation apparatus. The self-circulation command may include the current regulation temperature Tcurrent of the first temperature regulation apparatus, and the first temperature regulation apparatus starts self-circulation according to the received self-circulation command.

Through the technical solution of this embodiment of the present application, based on obtaining the minimum temperature of the first battery cluster, the regulation temperature of the first temperature regulation apparatus corresponding to the first battery cluster is further obtained, and the current temperature state of the first temperature regulation apparatus is fully used to perform the temperature increase regulation on the first battery cluster, thereby reducing a possibility of real-time operation of the first temperature regulation apparatus and reducing operation power consumption of the first temperature regulation apparatus.

Further, in some implementations of the above technical solution, different temperature increase regulation modes of the first temperature regulation apparatus may be controlled according to the regulation temperature of the first temperature regulation apparatus and the second preset regulation value. The technical solution of this implementation is easily implemented and has high reliability, which is conducive to performing effective temperature increase regulation on the first battery cluster.

Continuing to refer to FIG. 5, the temperature control method 500 may further include the following steps.

S541: Determine whether a difference between the maximum temperature Tmax_1 and the minimum temperature Tmin_1 of the first battery cluster is greater than a third preset value Tg.

S542: If the difference between the maximum temperature Tmax_1 and the minimum temperature Tmin_1 of the first battery cluster is greater than the third preset value Tg, control the first temperature regulation apparatus to perform temperature regulation on the first battery cluster.

S543: If the difference between the maximum temperature Tmax_1 and the minimum temperature Tmin_1 of the first battery cluster is less than or equal to the third preset value Tg, control the first temperature regulation apparatus to start dormancy.

Optionally, in some implementations, as shown in FIG. 5, step S541 may be executed after step S531. That is, step S541 may be executed in a case that the minimum temperature Tmin_1 of the first battery cluster is less than or equal to the second preset value Tc. Alternatively, in some other implementations, step S541 may alternatively be executed before step S531 and/or step S521. This embodiment of the present application does not impose a specific limitation on an execution order of step S521, step S531, and step S541.

In step S541, the BMS may sequentially determine whether a difference between the maximum temperature and the minimum temperature of each battery cluster in the battery system is greater than a third preset value Tg. For example, the BMS may determine whether a difference between the maximum temperature Tmax_1 and the minimum temperature Tmin_1 of the first battery cluster in the battery system is greater than the third preset value Tg. In a case that the difference between the maximum temperature Tmax_1 and the minimum temperature Tmin_1 of the first battery cluster is greater than the third preset value Tg, it indicates that a temperature difference between a battery with the maximum temperature and a battery with the minimum temperature is large, and thus temperature regulation needs to be performed on the first battery cluster.

Continuing to refer to step S542 to step S543, in a case that the difference between the maximum temperature Tmax_1 and the minimum temperature Tmin_1 of the first battery cluster is greater than the third preset value Tg, the BMS may control the first temperature regulation apparatus corresponding to the first battery cluster to perform temperature regulation on the first battery cluster; or, in a case that the difference between the maximum temperature Tmax_1 and the minimum temperature Tmin_1 of the first battery cluster is less than or equal to the third preset value Tg, the BMS may control the temperature regulation on the first battery cluster to be closed. For example, the BMS controls the first temperature regulation apparatus corresponding to the first battery cluster to start dormancy.

Optionally, in the above application embodiment, the third preset value Tg may be a preset value set according to actual needs. As an example but not a limitation, the third preset temperature Tg may be between 3°C and 5°C.

Optionally, the BMS may control the regulation temperature of the first temperature regulation apparatus, to perform temperature regulation on the first battery cluster. In this case, the BMS may send a temperature regulation command to the first temperature regulation apparatus. The temperature regulation command may include a preset temperature Tset. In an example, the preset temperature Tset may be the current regulation temperature Tcurrent of the first temperature regulation apparatus. The first temperature regulation apparatus starts self-circulation and performs temperature regulation on the first battery cluster by using the current regulation temperature Tcurrent. In other examples, the preset temperature Tset may alternatively be other temperature values. This embodiment of the present application does not impose a specific limitation on this.

Through the technical solution of this embodiment of the present application, the maximum temperature and the minimum temperature of the first battery cluster can be obtained, and a temperature regulation mode of the first battery cluster can be determined according to the difference between the maximum temperature and the minimum temperature, which is conducive to further improving in-cluster temperature uniformity of the first battery cluster, to improve the overall performance of the battery system.

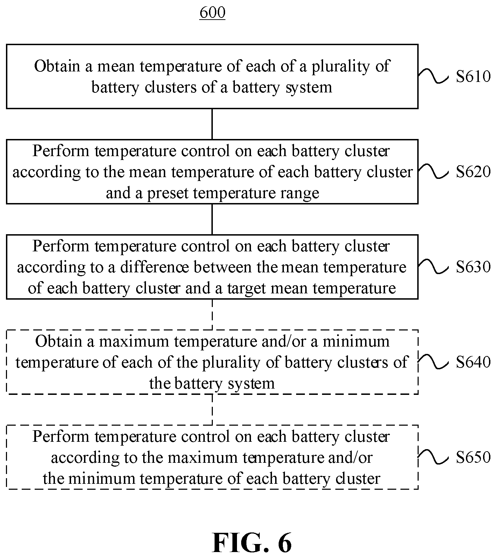

FIG. 6 shows a schematic flow block diagram of another temperature control method 600 according to an embodiment of the present application.

As shown in FIG. 6, the temperature control method 600 may include the following steps:
S610: Obtain a mean temperature of each of a plurality of battery clusters of a battery system, where the mean temperature of each battery cluster is a mean temperature value of batteries in each battery cluster.
S620: Perform temperature control on each battery cluster according to the mean temperature of each battery cluster and a preset temperature range.
S630: Perform temperature control on each battery cluster according to a difference between the mean temperature of each battery cluster and a target mean temperature.

Specifically, in this embodiment of the present application, after obtaining the mean temperature of each battery cluster of the battery system, the BMS can perform the temperature control on each battery cluster both according to the difference between the mean temperature of each battery cluster and the target mean temperature and according to the mean temperature of each battery cluster and the preset temperature range, which is conducive to controlling the mean temperature of each of the plurality of battery clusters to be within the preset temperature range, to further improve the inter-cluster temperature uniformity among the plurality of battery clusters.

Optionally, in some implementations, step S620 may be executed before step S630. That is, the BMS first performs temperature control on each battery cluster according to the mean temperature of each battery cluster and the preset temperature range, and then performs temperature control on each battery cluster according to the difference between the mean temperature of each battery cluster and the target mean temperature. In this implementation, the BMS first controls the mean temperature of each battery cluster within the preset temperature range, so that the mean temperature of each battery cluster is not too high or too low, which is conductive to improving temperature regulation efficiency of the subsequent temperature control on the battery cluster according to the target mean temperature.

In some alternative implementations, step S620 may be executed before step S630. That is, the BMS first performs temperature control on each battery cluster according to the difference between the mean temperature of each battery cluster and the target mean temperature, and then performs temperature control on each battery cluster according to the mean temperature of each battery cluster and the preset temperature range.

Optionally, continuing to refer to FIG. 6, in an embodiment of the present application, the temperature control method 600 may include the following steps.

S640: Obtain a maximum temperature and/or a minimum temperature of each of the plurality of battery clusters of the battery system.

S650: Perform temperature control on each battery cluster according to the maximum temperature and/or the minimum temperature of each battery cluster.

Specifically, specific technical solutions of step S640 and step S650 described above may be found in the related descriptions of the embodiments shown in FIG. 4 and FIG. 5 above. Details will be omitted herein.

In addition, in an example, as shown in FIG. 6, step S640 and step S650 may be executed after step S630. That is, after the BMS performs temperature control on each battery cluster according to the mean temperature of each battery cluster to achieve inter-cluster temperature uniformity, and then performs temperature control on each battery cluster according to the maximum temperature and/or the minimum temperature of each battery cluster to achieve in-cluster temperature uniformity.

Alternatively, in some alternative implementations, step S640 and step S650 may alternatively be executed before step S630 and/or step S620. This embodiment of the present application do not impose a limitation on a specific execution order of step S620 to step 640.

Optionally, in the process of performing temperature control on each battery cluster according to the mean temperature of each battery cluster and a preset temperature range, the BMS may sequentially determine whether the mean temperature of each battery cluster is within the preset temperature range, and in a case that a mean temperature of a first battery cluster in the plurality of battery clusters is greater than a maximum value within the preset temperature range, perform temperature decrease regulation on the first battery cluster, to cause the mean temperature of the first battery cluster to be within the preset temperature range; or, in a case that a mean temperature of a first battery cluster is less than a minimum value within the preset temperature range, perform temperature increase regulation on the first battery cluster, to cause the mean temperature of the first battery cluster to be within the preset temperature range.

In some implementations, the BMS may control a regulation temperature of a first temperature regulation apparatus corresponding to the first battery cluster to be less than or equal to the maximum value within the preset temperature range, and the first temperature regulation apparatus is configured to perform temperature decrease regulation on the first battery cluster. Alternatively, the BMS may control a regulation temperature of a first temperature regulation apparatus corresponding to the first battery cluster to be greater than or equal to the minimum value within the preset temperature range, and the first temperature regulation apparatus is configured to perform temperature increase regulation on the first battery cluster.

Through the technical solution of this implementation, the BMS can directly use the minimum value or the maximum value within the preset temperature range to regulate the regulation temperature corresponding to the first temperature regulation apparatus of the first battery cluster. This solution is easily implemented, and is conductive to improving the temperature regulation efficiency and regulation effect of the first temperature regulation apparatus on the first battery cluster.

In some alternative implementations, the BMS may alternatively control a first temperature regulation apparatus corresponding to the first battery cluster to have another preset temperature value, to implement temperature regulation on the first battery cluster. For example, the BMS may control the regulation temperature of the first temperature regulation apparatus corresponding to the first battery cluster to be less than or equal to the minimum value within the preset temperature range, and the first temperature regulation apparatus is configured to perform temperature decrease regulation on the first battery cluster. Alternatively, the BMS may control the regulation temperature of the first temperature regulation apparatus corresponding to the first battery cluster to be greater than or equal to the maximum value within the preset temperature range, and the first temperature regulation apparatus is configured to perform temperature increase regulation on the first battery cluster. This embodiment of the present application does not impose a limitation on a specific temperature regulation mode.

Optionally, in the embodiments shown in FIG. 2 to FIG. 6, before the performing temperature control on each battery cluster according to the cluster temperature of each battery cluster, the battery system temperature control method may further include: obtaining electrical parameters of the plurality of battery clusters; and determining, according to the electrical parameters, that the plurality of battery clusters are in a non-charging or discharging state.

Specifically, the BMS may acquire the electrical parameters of the plurality of battery clusters. The electrical parameters may be, for example, current, voltage, charging capacity, discharging capacity, a charging quantity, a discharging quantity, and the like. The BMS may determine, according to the electrical parameters, whether the plurality of battery clusters are in a charging or discharging state.

In an example, the BMS may acquire magnitudes of current on busbar elements of the plurality of battery clusters, and may determine, according to the magnitudes of the current on the busbar elements, that the plurality of battery clusters are in a charging, discharging, or static state. For example, in a charging process of the plurality of battery clusters, charging current on the busbar elements of the plurality of battery clusters may be less than -50 A. In a discharging process of the plurality of battery clusters, discharging current on the busbar elements of the plurality of battery clusters may be greater than 50 A.

In another example, the BMS may continuously read voltage/charging or discharging quantities of the plurality of battery clusters for more than 3 s, and determine whether data read for more than 3 s is in a continuously rise or fall state, where continuous rise or fall means being in charging or discharging.

In a case that the BMS determines that the plurality of battery clusters are in a non-charging or discharging state, the BMS is configured to perform the subsequent temperature control method. That is, the BMS performs temperature control on each battery cluster according to the cluster temperature of each battery cluster, or may perform temperature control on each battery cluster according to the maximum temperature and/or the minimum temperature of each battery cluster.

In a case that the plurality of battery clusters in the battery system are in the non-charging or discharging state, the plurality of battery clusters may be interfered by external interference such as an environment, causing inconsistent inter-cluster temperatures. In this case, if the plurality of battery clusters are directly charged or discharged, it may always cause an inter-cluster temperature difference in the plurality of battery clusters in the charging or discharging process, and it may further cause an increase in the inter-cluster temperature difference in the plurality of battery clusters in the charging or discharging process. This affects charging or discharging performance of the battery system in which the plurality of battery clusters are included.

In view of this, through the technical solution of this embodiment of the present application, a battery system temperature control method applied to a non-charging or discharging state is provided. According to the temperature control method, in a case that the plurality of battery clusters are in the non-charging or discharging state, the temperature control is performed on the plurality of battery clusters according to the cluster temperatures of the plurality of battery clusters, which is conductive to reducing a possibility of a large inter-cluster temperature difference in the plurality of battery clusters during charging or discharging and improving the charging or discharging performance of the battery system in which the plurality of battery clusters are included.

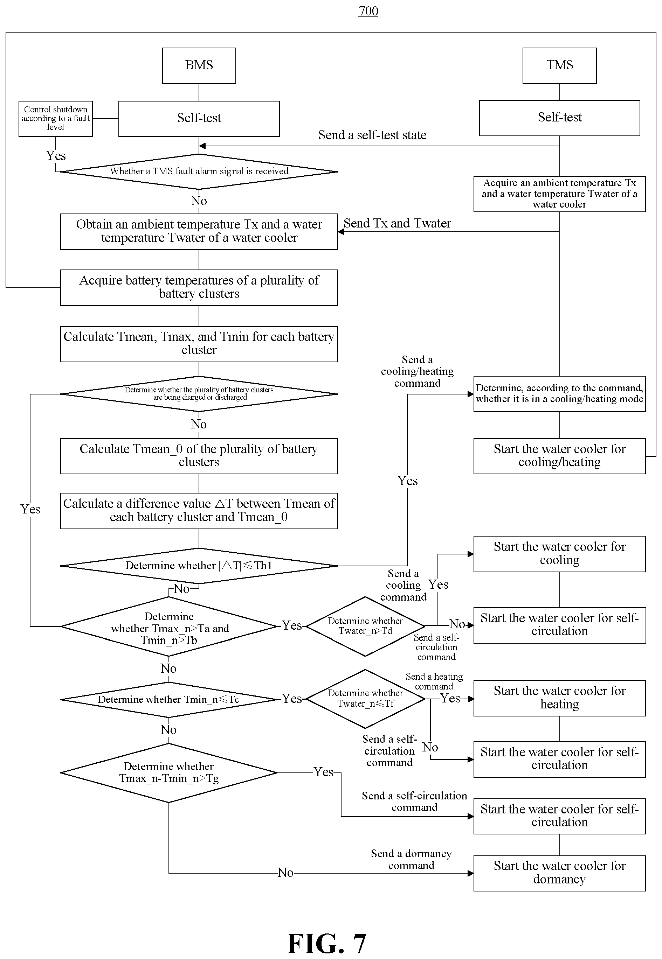

FIG. 7 shows a schematic flow block diagram of another temperature control method 700 according to an embodiment of the present application. The temperature control method 700 involves a battery management system (BMS) and a thermal management system (TMS). The TMS may be a water-cooled thermal management system, namely, including: a water cooler or the like. Optionally, a plurality of TMSs are involved. That is, the plurality of TMSs may be in one-to-one correspondence to a plurality of battery clusters in a battery system.

As shown in FIG. 7, the temperature control method 700 may include the following steps:

First, when the BMS and the TMS are started, the BMS and TMS may perform self-test, and the TMS sends its self-test state to the TMS. In the self-test process of the TMS, if fault information is detected, self-test information of the TMS may include a fault alarm signal. By receiving the self-test state of the TMS, the BMS determines whether the fault alarm signal of the TMS is received.

After receiving the fault alarm signal of the TMS, the BMS may control the TMS to shut down or perform other actions according to an alarm level in the fault alarm signal.

In a case that the BMS does not receive the fault alarm signal of the TMS, the BMS may obtain an ambient temperature Tx and water temperature Twater, which are acquired by the TMS, of the water cooler. Furthermore, the BMS may further obtain a temperature of each battery of the plurality of battery clusters in the battery system.

Further, the BMS may calculate a mean temperature Tmean, a maximum temperature Tmax, and a minimum temperature Tmin of each battery cluster according to the temperature of each battery of the plurality of battery clusters, where Tmean_n may represent a mean temperature of an n-th battery cluster in the plurality of battery clusters; Tmax_n may represent a maximum temperature of the n-th battery cluster; and Tmin_n may represent a minimum temperature of the n-th battery cluster.

Specifically, the n-th battery cluster may include m batteries. Temperatures of the m batteries may be T_1, T_2,..., T_m. The mean temperature Tmean_n of the n-th battery cluster is (T_1+T_2+...+T_m)/m. The maximum temperature Tmax_n of the n-th battery cluster is max{T_1+T_2+...+T_m}; and the minimum temperature Tmin_n of the n-th battery cluster is min{T_1+T_2+...+T_m}.

Then, the BMS may determine whether the battery system is currently in a charging or discharging state. For example, the BMS may determine, according to a magnitude of current on a busbar of the battery system, whether the battery system is in a charging or discharging state. In some implementations, charging current of charging may be less than -50 A, and discharging current of discharging may be greater than 50 A. For another example, the BMS may continuously read voltage/a charging or discharging quantity/charging or discharging capacity of the battery system for more than 3 s, and determine whether data read for more than 3 s is in a continuously rise or fall state. According to continuous rise or continuous fall, it can be determined that the battery system is in charging or discharging.

In a case that the battery system is not in the charging or discharging state, the BMS may determine a minimum value (or maximum value) Tmean_0 among the mean temperatures of the plurality of battery clusters according to the mean temperatures of the plurality of battery clusters. Then, the BMS may calculate a difference ΔT between the mean temperature of each battery cluster and Tmean_0.

Further, the BMS continues to determine whether an absolute value |ΔT| of the difference between the mean temperature of each battery cluster and Tmean_0 is less than or equal to a preset value Th1. For example, the BMS may determine whether an absolute value |△T_n| of a difference △T_n between the mean temperature Tmean_n of the n-th battery cluster and Tmean_0 is less than or equal to the preset value Th1. In an example, the preset value Th1 may be less than or equal to 5°C, and further, Th1 may be less than or equal to 2°C.

In a case that |△T_n| is greater than the preset value Th1, the BMS may send a cooling or heating command for the n-th battery cluster to a TMS corresponding to the n-th battery cluster, so that the TMS may determine, according to the cooling or heating command, that the n-th battery cluster needs to be in a cooling or heating mode, and the TMS starts the water-cooling mechanism for cooling or heating, thereby performing temperature decrease or increase regulation on the n-th battery cluster. For example, when Tmean_0 is the minimum value among the mean temperatures of the plurality of battery clusters, in a case that |△T_n| is greater than the preset value Th1, it indicates that a temperature of the n-th battery cluster is high. In this case, the BMS may send a cooling command for the n-th battery cluster to the TMS. For another example, when Tmean_0 is the maximum value among the mean temperatures of the plurality of battery clusters, in a case that |△T_n| is greater than the preset value Th1, it indicates that a temperature of the n-th battery cluster is low. In this case, the BMS may send a heating command for the n-th battery cluster to the TMS.

The cooling or heating command for the n-th battery cluster may include a preset cooling or heating temperature. The preset cooling temperature may be the minimum value among the mean temperatures of the plurality of battery clusters, and the preset heating temperature may be the maximum value among the mean temperatures of the plurality of battery clusters.

In the process of adjusting the n-th battery cluster, the BMS may further send a self-circulation command for another battery cluster to a TMS corresponding to the another battery cluster, so that the TMS controls the water cooler to perform self-circulation temperature regulation on the another battery cluster. The another battery cluster is a battery cluster with |ΔT| less than or equal to the preset value Th1. The self-circulation command may include a preset self-circulation temperature. The self-circulation temperature may be a mean temperature of a current battery cluster.

After the TMSs perform temperature control on the plurality of battery clusters once, the TMSs may continue to acquire battery temperatures of the plurality of battery clusters and determine an absolute value |△T| of a difference between the mean temperature of each battery cluster and Tmean_0. After the temperature of each battery cluster is adjusted, the absolute value |△T| of the difference between the mean temperature of each battery cluster and Tmean_0 may be caused to be less than or equal to the preset value Th1.

In a case that the absolute value |ΔT| of the difference between the mean temperature of each battery cluster and Tmean_0 is less than or equal to the preset value Th1, the BMS may further perform temperature regulation on each battery cluster according to the maximum temperature and the minimum temperature of each battery cluster.

In addition, when it is determined that the plurality of battery clusters are in charging or discharging, the BMS may further directly perform further temperature regulation on each battery cluster according to the maximum temperature and the minimum temperature of each battery cluster.

Specifically, the n-th battery cluster in the plurality of battery clusters is taken as an example. The BMS may first determine whether the maximum temperature Tmax_n of the n-th battery cluster is greater than a preset value Ta. Optionally, the preset value Ta may be set according to an optimal temperature threshold of a battery. Ta may be, for example, between 20°C and 30°C. Further, in this process, the BMS may comprehensively determine whether the maximum temperature Tmax_n of the n-th battery cluster is greater than the preset value Ta and whether the minimum temperature Tmin_n of the n-th battery cluster is greater than a preset value Tb. The preset value Tb may also be set according to an optimal temperature threshold of a battery. Tb is less than Ta, and Ta may also be, for example, between 20°C and 30°C.

In a case of Tmax_n>Ta and Tmin_n>Tb, the BMS may continue to determine whether the water temperature Twater_n of the water cooler corresponding to the n-th battery cluster is greater than a preset value Td. Td is less than Tb. For example, Td may be between Tb minus 9°C and Tb minus 11°C.

In a case of Twater_n>Td, the BMS may send a cooling command to the TMS to set a cooling temperature Tset1_n of the n-th battery cluster. Tset1_n may be between Twater_n minus 3°C and Twater_n minus 5°C. In a case of Twater_n≤Td, the BMS may send a self-circulation command to the TMS to set a self-circulation temperature Tset2_n of the n-th battery cluster. Tset2_n may be equal to Twater.

In a case of Tmax_n≤Ta or Tmin_n≤Tb, the BMS may continue to determine whether the minimum temperature Tmin_n of the n-th battery cluster is less than or equal to the preset value Tc. Tc is less than the above preset value Tb. For example, Tc may be between Tb minus 3°C and Tb minus 5°C.

In a case of Tmin_n≤Tc, the BMS may continue to determine whether the water temperature Twater_n of the water cooler corresponding to the n-th battery cluster is less than or equal to a preset value Tf. Tf is greater than Tc. For example, Tf may be between Tc plus 14°C and Tc minus 16°C.

In a case of Twater_n≤Tf, the BMS may send a heating command to the TMS to set a heating temperature Tset3_n of the n-th battery cluster. Tset3_n may be between Twater_n plus 3°C and Twater_n plus 5°C. In a case of Twater_n>Tf, the BMS may send a self-circulation command to the TMS to set a self-circulation temperature Tset2_n of the n-th battery cluster. Tset2_n may be equal to Twater.

In a case of Tmin_n>Tc, the BMS may continue to determine whether the difference between the maximum temperature Tmax_n and the minimum temperature Tmin_n of the n-th battery cluster is greater than a preset value Tg. Tg may be, for example, between 3°C and 5°C.

In a case of Tmax_n-Tmin_n>Tg, the BMS may send a self-circulation command to the TMS to set a self-circulation temperature Tset2_n of the n-th battery cluster. In a case of Tmax_n-Tmin_n≤Tg, the BMS may send a dormancy command to the TMS, and the water cooler corresponding to the n-th battery cluster may enter a dormant state.

The above mainly uses the temperature control on the n-th battery cluster in the plurality of battery clusters as an example for explanation. It can be understood that a temperature control mode of any one battery cluster in the plurality of battery clusters may be controlled by using the temperature control mode of the n-th battery cluster. Optionally, the temperature control on the plurality of battery clusters may be performed synchronously by the BMS and the plurality of TMSs, thereby implementing parallel temperature control on the plurality of battery clusters.

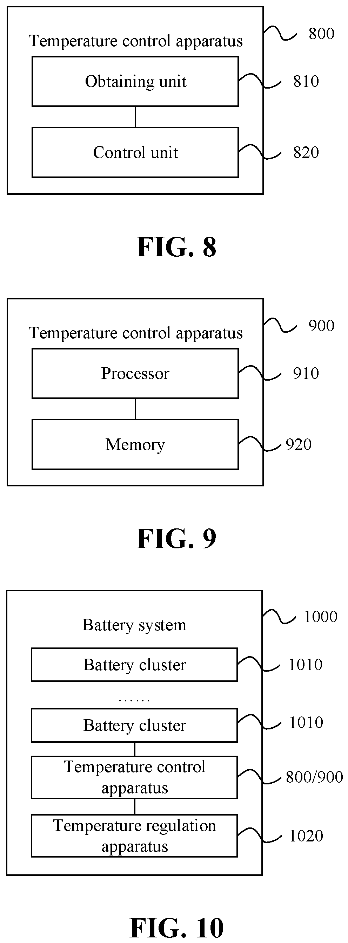

The temperature control method provided in the present application is described above in conjunction with FIG. 1 to FIG. 7. A temperature control apparatus provided in the present application will be described below in conjunction with FIG. 8. The temperature control apparatus below can correspond to the temperature control method above. A specific technical solution can be found in the specific descriptions of the above embodiments. For the sake of brevity, no further details will be provided below.

FIG. 8 shows a schematic structural block diagram of a temperature control apparatus 800 according to an embodiment of the present application. Optionally, in some implementations, the temperature control apparatus 800 may be a BMS.

As shown in FIG. 8, the temperature control apparatus 800 includes: an obtaining unit 810 and a control unit 820. The obtaining unit 810 is configured to obtain a cluster temperature of each of a plurality of battery clusters of a battery system. The control unit 820 is configured to perform temperature control on each battery cluster according to the cluster temperature of each battery cluster.

In some possible implementations, the cluster temperature of each battery cluster includes: a mean temperature of each battery cluster; the mean temperature of each battery cluster is a mean temperature value of batteries in each battery cluster; and the control unit 820 is specifically configured to: determine a target mean temperature of the plurality of battery clusters according to the mean temperature of each battery cluster, and perform temperature control on each battery cluster according to a difference between the mean temperature of each battery cluster and the target mean temperature. The target mean temperature is a maximum value, a minimum value, or a mean value among the mean temperatures of the plurality of battery clusters.

In some possible implementations, the control unit 820 is specifically configured to: in a case that a difference between a mean temperature of a first battery cluster in the plurality of battery clusters and the target mean temperature is within a first preset range, maintain a current temperature of the first battery cluster.

In some possible implementations, the control unit 820 is specifically configured to: in a case that the difference between the mean temperature of the first battery cluster in the plurality of battery clusters and the target mean temperature is beyond the first preset range, perform temperature regulation on the first battery cluster.

In some possible implementations, the control unit 820 is specifically configured to: control a regulation temperature of a first temperature regulation apparatus corresponding to the first battery cluster, the first temperature regulation apparatus being configured to perform temperature regulation on the first battery cluster.

In some possible implementations, the control unit 820 is specifically configured to: control the regulation temperature of the first temperature regulation apparatus corresponding to the first battery cluster to be the target mean temperature, the first temperature regulation apparatus being configured to perform temperature regulation on the first battery cluster.

Optionally, the above first preset range may be between -5°C and 5°C. Further, the above first preset range may be between -2°C and 2°C.

In some possible implementations, the cluster temperature of each battery cluster includes: a maximum temperature and/or a minimum temperature of each battery cluster; the maximum temperature of each battery cluster is a maximum temperature value of the batteries in each battery cluster; the minimum temperature of each battery cluster is a minimum temperature value of the batteries in each battery cluster; and the control unit 820 is configured to perform temperature control on each battery cluster according to the maximum temperature and/or the minimum temperature of each battery cluster.

In some possible implementations, the control unit 820 may be specifically configured to: in a case that the difference between the mean temperature of each of the plurality of battery clusters and the target mean temperature is within the first preset range, perform temperature control on each battery cluster according to the maximum temperature and/or the minimum temperature of each battery cluster, where the target mean temperature is a maximum value, a minimum value, or a mean value among the mean temperatures of the plurality of battery clusters.

In some possible implementations, the control unit 820 may be specifically configured to: in a case that the maximum temperature of a first battery cluster in the plurality of battery clusters is greater than a first preset value, perform temperature decrease regulation on the first battery cluster.

In some possible implementations, in a case that the maximum temperature of the first battery cluster in the plurality of battery clusters is greater than the first preset value, the obtaining unit 810 is further configured to obtain a regulation temperature of a first temperature regulation apparatus corresponding to the first battery cluster. The control unit 820 may be specifically configured to: perform temperature decrease regulation on the first battery cluster according to the regulation temperature of the first temperature regulation apparatus.

In some possible implementations, the control unit 820 may be specifically configured to: in a case that the regulation temperature of the first temperature regulation apparatus is greater than a first preset regulation value, control the regulation temperature of the first temperature regulation apparatus to decrease, to perform the temperature decrease regulation on the first battery cluster; or, in a case that the regulation temperature of the first temperature regulation apparatus is less than or equal to a first preset regulation value, control the first temperature regulation apparatus to perform the temperature decrease regulation on the first battery cluster by using a current regulation temperature.

In some possible implementations, the control unit 820 may be specifically configured to: in a case that the minimum temperature of the first battery cluster in the plurality of battery clusters is less than or equal to a second preset value, perform temperature increase regulation on the first battery cluster.

In some possible implementations, in a case that the minimum temperature of the first battery cluster in the plurality of battery clusters is less than or equal to the second preset value, the control unit 810 is further configured to obtain the regulation temperature of the first temperature regulation apparatus corresponding to the first battery cluster. The control unit 820 may be specifically configured to: perform temperature increase regulation on the first battery cluster according to the regulation temperature of the first temperature regulation apparatus.

In some possible implementation, the control unit 820 may be specifically configured to: in a case that the regulation temperature of the first temperature regulation apparatus is less than or equal to a second preset regulation value, control the regulation temperature of the first temperature regulation apparatus to increase, to perform the temperature increase regulation on the first battery cluster; or, in a case that the regulation temperature of the first temperature regulation apparatus is greater than a second preset regulation value, control the first temperature regulation apparatus to perform the temperature increase regulation on the first battery cluster by using a current regulation temperature.

In some possible implementations, the control unit 820 may be specifically configured to: in a case that a difference between the maximum temperature and the minimum temperature of the first battery cluster in the plurality of battery clusters is greater than a third preset value, perform temperature regulation on the first battery cluster; or, in a case that a difference between the maximum temperature and the minimum temperature of the first battery cluster in the plurality of battery clusters is less than or equal to a third preset value, close temperature regulation on the first battery cluster.

In some possible implementations, the cluster temperature of each battery cluster includes a mean temperature of each battery cluster; the mean temperature of each battery cluster is a mean temperature value of batteries in each battery cluster; and the control unit 820 is configured to perform temperature control on each battery cluster according to the mean temperature of each battery cluster and a preset temperature range.

In some possible implementations, the control unit 820 may be specifically configured to: in a case that a mean temperature of a first battery cluster in the plurality of battery clusters is greater than a maximum value within the preset temperature range, perform temperature decrease regulation on the first battery cluster, to cause the mean temperature of the first battery cluster to be within the preset temperature range; or, in a case that a mean temperature of a first battery cluster in the plurality of battery clusters is less than a minimum value within the preset temperature range, perform temperature increase regulation on the first battery cluster, to cause the mean temperature of the first battery cluster to be within the preset temperature range.

In some possible implementations, the control unit 820 may be specifically configured to: control a regulation temperature of a first temperature regulation apparatus corresponding to the first battery cluster to be less than or equal to the maximum value within the preset temperature range, the first temperature regulation apparatus being configured to perform temperature decrease regulation on the first battery cluster, to cause the mean temperature of the first battery cluster to be within the preset temperature range; or, control a regulation temperature of a first temperature regulation apparatus corresponding to the first battery cluster to be greater than or equal to the minimum value within the preset temperature range, the first temperature regulation apparatus being configured to perform temperature increase regulation on the first battery cluster, to cause the mean temperature of the first battery cluster to be within the preset temperature range.

In some possible implementations, the obtaining unit 810 is further configured to obtain electrical parameters of the plurality of battery clusters. The control unit 820 is further configured to determine, according to the electrical parameters, that the plurality of battery clusters are in a non-charging or discharging state.

In some possible implementations, the control unit 820 includes: a communication interface. The communication interface is configured to send a temperature control command to a temperature regulation apparatus corresponding to each battery cluster, so that the temperature regulation apparatus performs temperature control on each battery cluster according to the temperature control command.

In some possible implementations, a fluid is accommodated in the temperature regulation apparatus, and the fluid is configured to regulate a temperature of each battery cluster.

FIG. 9 shows a schematic structural block diagram of another temperature control apparatus 900 according to an embodiment of the present application. Optionally, in some implementations, the temperature control apparatus 900 may be a BMS.

As shown in FIG. 9, the temperature control apparatus 900 may include a processor 910 and a memory 920. The memory 920 is configured to store a computer program, and the processor 910 is configured to call and run the computer program stored in the memory to perform: the battery system temperature control method in any of the above embodiments.

FIG. 10 shows a schematic structural block diagram of a battery system 1000 according to an embodiment of the present application.

As shown in FIG. 10, the battery system 1000 includes: a plurality of battery clusters 1010 and the temperature control apparatus 800 or the temperature control apparatus 900 in the embodiment shown in FIG. 8 or FIG. 9 above. The temperature control apparatus 800 or the temperature control apparatus 900 may be configured to perform temperature control on each of the plurality of battery clusters 1010.

Optionally, the battery system 1000 may further include: a temperature regulation apparatus 1020. The temperature control apparatus 800 or the temperature control apparatus 900 is configured to send a temperature control command to the temperature regulation apparatus 1020, so that the temperature regulation apparatus 1020 performs temperature control on each battery cluster according to the temperature control command.

In some specific implementations, the temperature control apparatus 800 or the temperature control apparatus 900 may be a BMS, and the temperature regulation apparatus 1020 may be a TMS.

Optionally, a plurality of temperature regulation apparatuses 1020 may be included. The plurality of temperature regulation apparatuses 1020 may be in one-to-one correspondence to the plurality of battery clusters 1010.

Optionally, the battery system 1000 according to this embodiment of the present application may be a power system or an energy storage system.

An embodiment of the present application further provides a computer-readable storage medium, having a computer program stored therein. The computer program, when run on a computer device, causes the computer device to preform the battery system temperature control method in any one of the above embodiments.

An embodiment of the present application further provides a computer program product containing a computer program that, when running on a computer, causes the computer device to preform the battery system temperature control method in any one of the above embodiments.

An embodiment of the present application further provides a chip. The chip includes a processor and a data interface. The processor reads an instruction stored in a memory through the data interface to preform the battery system temperature control method in any one of the above embodiments.

Optionally, the above computer-readable storage medium, computer program product, and chip may be applied to a temperature control apparatus, which may be, for example, a BMS.

It should be understood that the specific examples herein are only intended to help those skilled in the art better understand the embodiments of the present application, and are not intended to limit the scope of the embodiments of the present application.

It is also understood that in the embodiments of the present application, an order of sequence numbers of the foregoing processes does not indicate an execution sequence, and execution sequences of the processes should be determined according to functions and internal logics thereof and should not impose any limitation on an implementation process of the embodiments of the present application.

Those of skill in the art would recognize that the illustrative modules or units and algorithm steps described in connection with the embodiments disclosed herein may be implemented as electronic hardware, or combinations of computer software and electronic hardware. Whether these functions are implemented as hardware or software depends on particular application and design constraint conditions of the technical solutions. A person skilled in the art may use different methods to implement the described functions for each particular application, but it should not be considered that the implementation goes beyond the scope of the present application.

Although the present application has been described with reference to the preferred embodiments, various improvements can be made thereto and components thereof can be replaced with equivalents without departing from the scope of the present application. **In** particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery system temperature control method, comprising:
obtaining a cluster temperature of each of a plurality of battery clusters of a battery system; and
performing temperature control on each battery cluster according to the cluster temperature of each battery cluster.

2. The temperature control method according to claim 1, wherein the cluster temperature of each battery cluster comprises: a mean temperature of each battery cluster; the mean temperature of each battery cluster is a mean temperature value of batteries in each battery cluster; and
the performing temperature control on each battery cluster according to the cluster temperature of each battery cluster comprises:
determining a target mean temperature of the plurality of battery clusters according to the mean temperature of each battery cluster, wherein the target mean temperature is a maximum value, a minimum value, or a mean value among the mean temperatures of the plurality of battery clusters; and
performing temperature control on each battery cluster according to a difference between the mean temperature of each battery cluster and the target mean temperature.

3. The temperature control method according to claim 2, wherein the performing temperature control on each battery cluster according to a difference between the mean temperature of each battery cluster and the target mean temperature comprises:
in a case that a difference between a mean temperature of a first battery cluster in the plurality of battery clusters and the target mean temperature is beyond a first preset range, performing temperature regulation on the first battery cluster.

4. The temperature control method according to claim 3, wherein the performing temperature regulation on the first battery cluster comprises:
controlling a regulation temperature of a first temperature regulation apparatus corresponding to the first battery cluster, the first temperature regulation apparatus being configured to perform temperature regulation on the first battery cluster.

5. The temperature control method according to claim 4, wherein the controlling a regulation temperature of a first temperature regulation apparatus corresponding to the first battery cluster, the first temperature regulation apparatus being configured to perform temperature regulation on the first battery cluster comprises:
controlling the regulation temperature of the first temperature regulation apparatus corresponding to the first battery cluster to be the target mean temperature, the first temperature regulation apparatus being configured to perform temperature regulation on the first battery cluster by using the target mean temperature.

6. The temperature control method according to any one of claims 3 to 5, wherein the first preset range is between -5 degrees Celsius and 5degrees Celsius.

7. The temperature control method according to any one of claims 2 to 6, wherein the performing temperature control on each battery cluster according to a difference between the mean temperature of each battery cluster and the target mean temperature comprises:
in a case that the difference between the mean temperature of the first battery cluster in the plurality of battery clusters and the target mean temperature is within the first preset range, maintaining a current temperature of the first battery cluster.

8. The temperature control method according to any one of claims 1 to 7, wherein the cluster temperature of each battery cluster comprises: a maximum temperature and/or a minimum temperature of each battery cluster; the maximum temperature of each battery cluster is a maximum temperature value of the batteries in each battery cluster; the minimum temperature of each battery cluster is a minimum temperature value of the batteries in each battery cluster; and
the performing temperature control on each battery cluster according to the cluster temperature of each battery cluster comprises:
performing temperature control on each battery cluster according to the maximum temperature and/or the minimum temperature of each battery cluster.

9. The temperature control method according to claim 8, wherein the performing temperature control on each battery cluster according to the maximum temperature and/or the minimum temperature of each battery cluster comprises:
in a case that the difference between the mean temperature of each of the plurality of battery clusters and the target mean temperature is within the first preset range, performing temperature control on each battery cluster according to the maximum temperature and/or the minimum temperature of each battery cluster,
wherein the target mean temperature is a maximum value, a minimum value, or a mean value among the mean temperatures of the plurality of battery clusters.

10. The temperature control method according to claim 8 or 9, wherein the performing temperature control on each battery cluster according to the maximum temperature and/or the minimum temperature of each battery cluster comprises:
in a case that the maximum temperature of a first battery cluster in the plurality of battery clusters is greater than a first preset value, performing temperature decrease regulation on the first battery cluster.

11. The temperature control method according to claim 10, wherein the performing temperature decrease regulation on the first battery cluster comprises:
obtaining a regulation temperature of a first temperature regulation apparatus corresponding to the first battery cluster; and
performing the temperature decrease regulation on the first battery cluster according to the regulation temperature of the first temperature regulation apparatus.

12. The temperature control method according to claim 11, wherein the performing the temperature decrease regulation on the first battery cluster according to the regulation temperature of the first temperature regulation apparatus comprises:
in a case that the regulation temperature of the first temperature regulation apparatus is greater than a first preset regulation value, controlling the regulation temperature of the first temperature regulation apparatus to decrease, to perform the temperature decrease regulation on the first battery cluster; or,
in a case that the regulation temperature of the first temperature regulation apparatus is less than or equal to a first preset regulation value, controlling the first temperature regulation apparatus to perform the temperature decrease regulation on the first battery cluster by using the regulation temperature.

13. The temperature control method according to any one of claims 8 to 12, wherein the performing temperature control on each battery cluster according to the maximum temperature and/or the minimum temperature of each battery cluster comprises:
in a case that the minimum temperature of a first battery cluster in the plurality of battery clusters is less than or equal to a second preset value, performing temperature increase regulation on the first battery cluster.

14. The temperature control method according to claim 13, wherein the performing temperature increase regulation on the first battery cluster comprises:
obtaining a regulation temperature of a first temperature regulation apparatus corresponding to the first battery cluster; and
performing the temperature increase regulation on the first battery cluster according to the regulation temperature of the first temperature regulation apparatus.

15. The temperature control method according to claim 14, wherein the performing the temperature increase regulation on the first battery cluster according to the regulation temperature of the first temperature regulation apparatus comprises:
in a case that the regulation temperature of the first temperature regulation apparatus is less than or equal to a second preset regulation value, controlling the regulation temperature of the first temperature regulation apparatus to increase, to perform the temperature increase regulation on the first battery cluster; or,
in a case that the regulation temperature of the first temperature regulation apparatus is greater than a second preset regulation value, controlling the first temperature regulation apparatus to perform the temperature increase regulation on the first battery cluster by using the regulation temperature.

16. The temperature control method according to any one of claims 8 to 15, wherein the performing temperature control on each battery cluster according to the maximum temperature and/or the minimum temperature of each battery cluster comprises:
in a case that a difference between the maximum temperature and the minimum temperature of the first battery cluster in the plurality of battery clusters is greater than a third preset value, performing temperature regulation on the first battery cluster; or,
in a case that a difference between the maximum temperature and the minimum temperature of the first battery cluster in the plurality of battery clusters is less than or equal to a third preset value, closing temperature regulation on the first battery cluster.

17. The temperature control method according to any one of claims of 1 to 16, wherein the cluster temperature of each battery cluster comprises: a mean temperature of each battery cluster; the mean temperature of each battery cluster is a mean temperature value of batteries in each battery cluster; and
the performing temperature control on each battery cluster according to the cluster temperature of each battery cluster comprises:
performing temperature control on each battery cluster according to the mean temperature of each battery cluster and a preset temperature range.

18. The temperature control method according to claim 17, wherein the performing temperature control on each battery cluster according to the mean temperature of each battery cluster and a preset temperature range comprises:
in a case that a mean temperature of a first battery cluster in the plurality of battery clusters is greater than a maximum value within the preset temperature range, performing temperature decrease regulation on the first battery cluster, to cause the mean temperature of the first battery cluster to be within the preset temperature range; or,
in a case that a mean temperature of a first battery cluster in the plurality of battery clusters is less than a minimum value within the preset temperature range, performing temperature increase regulation on the first battery cluster, to cause the mean temperature of the first battery cluster to be within the preset temperature range.

19. The temperature control method according to claim 18, wherein the performing temperature decrease regulation on the first battery cluster, to cause the mean temperature of the first battery cluster to be within the preset temperature range comprises:
controlling a regulation temperature of a first temperature regulation apparatus corresponding to the first battery cluster to be less than or equal to the maximum value within the preset temperature range, the first temperature regulation apparatus being configured to perform temperature decrease regulation on the first battery cluster, to cause the mean temperature of the first battery cluster to be within the preset temperature range; or,
the performing temperature increase regulation on the first battery cluster, to cause the mean temperature of the first battery cluster to be within the preset temperature range comprises:
controlling a regulation temperature of a first temperature regulation apparatus corresponding to the first battery cluster to be greater than or equal to the minimum value within the preset temperature range, the first temperature regulation apparatus being configured to perform temperature increase regulation on the first battery cluster, to cause the mean temperature of the first battery cluster to be within the preset temperature range.

20. The temperature control method according to any one of claims 1 to 19, wherein before the performing temperature control on each battery cluster according to the cluster temperature of each battery cluster, the temperature control method further comprises:
obtaining electrical parameters of the plurality of battery clusters; and
determining, according to the electrical parameters, that the plurality of battery clusters are in a non-charging or discharging state.

21. The temperature control method according to any one of claims 1 to 20, wherein the temperature control method is applied to a battery management system (BMS); and
the performing temperature control on each battery cluster according to the cluster temperature of each battery cluster comprises:
sending, by the BMS, a temperature control command to a temperature regulation apparatus corresponding to each battery cluster according to the cluster temperature of each battery cluster, to cause the temperature regulation apparatus to perform temperature control on each battery cluster according to the temperature control command.

22. The temperature control method according to claim 21, wherein a fluid is accommodated in the temperature regulation apparatus, and the fluid is configured to regulate a temperature of each battery cluster.

23. A battery system temperature control apparatus, comprising:
an obtaining unit, configured to obtain a cluster temperature of each of a plurality of battery clusters of a battery system; and
a control unit, configured to perform temperature control on each battery cluster according to the cluster temperature of each battery cluster.

24. The temperature control apparatus according to claim 23, wherein the cluster temperature of each battery cluster comprises: a mean temperature of each battery cluster; the mean temperature of each battery cluster is a mean temperature value of batteries in each battery cluster; and
the control unit is configured to determine a target mean temperature of the plurality of battery clusters according to the mean temperature of each battery cluster, wherein the target mean temperature is a maximum value, a minimum value, or a mean value among the mean temperatures of the plurality of battery clusters; and
perform temperature control on each battery cluster according to a difference between the mean temperature of each battery cluster and the target mean temperature.

25. The temperature control apparatus according to claim 24, wherein the control unit is configured to:
in a case that a difference between a mean temperature of a first battery cluster in the plurality of battery clusters and the target mean temperature is beyond a first preset range, perform temperature regulation on the first battery cluster.

26. The temperature control apparatus according to claim 25, wherein the control unit is configured to:
control a regulation temperature of a first temperature regulation apparatus corresponding to the first battery cluster, the first temperature regulation apparatus being configured to perform temperature regulation on the first battery cluster.

27. The temperature control apparatus according to claim 26, wherein the control unit is configured to:
control the regulation temperature of the first temperature regulation apparatus corresponding to the first battery cluster to be the target mean temperature, the first temperature regulation apparatus being configured to perform temperature regulation on the first battery cluster by using the target mean temperature.

28. The temperature control apparatus according to any one of claims 25 to 27, wherein the first preset range is between -5 degrees Celsius and 5 degrees Celsius.

29. The temperature control apparatus according to any one of claims 24 to 28, wherein the control unit is configured to:
in a case that the difference between the mean temperature of the first battery cluster in the plurality of battery clusters and the target mean temperature is within the first preset range, maintain a current temperature of the first battery cluster.

30. The temperature control apparatus according to any one of claims 23 to 29, wherein the cluster temperature of each battery cluster comprises: a maximum temperature and/or a minimum temperature of each battery cluster; the maximum temperature of each battery cluster is a maximum temperature value of the batteries in each battery cluster; the minimum temperature of each battery cluster is a minimum temperature value of the batteries in each battery cluster; and
the control unit is configured to perform temperature control on each battery cluster according to the maximum temperature and/or the minimum temperature of each battery cluster.

31. The temperature control apparatus according to claim 30, wherein in a case that the difference between the mean temperature of each of the plurality of battery clusters and the target mean temperature is within the first preset range, the control unit is configured to perform temperature control on each battery cluster according to the maximum temperature and/or the minimum temperature of each battery cluster, wherein the target mean temperature is a maximum value, a minimum value, or a mean value among the mean temperatures of the plurality of battery clusters.

32. The temperature control apparatus according to any one of claims 23 to 31, wherein the obtaining unit is further configured to obtain electrical parameters of the plurality of battery clusters; and
the control unit is further configured to determine, according to the electrical parameters, that the plurality of battery clusters are in a non-charging or discharging state.

33. The temperature control apparatus according to any one of claims 23 to 32, wherein the control unit comprises: a communication interface; the communication interface is configured to send a temperature control command to a temperature regulation apparatus corresponding to each battery cluster, to cause the temperature regulation apparatus to perform temperature control on each battery cluster according to the temperature control command.

34. The temperature control apparatus according to claim 33, wherein a fluid is accommodated in the temperature regulation apparatus, and the fluid is configured to regulate a temperature of each battery cluster.

35. A battery system temperature control apparatus, comprising: a processor and a memory, wherein the memory is configured to store a computer program, and the processor is configured to call and run the computer program stored in the memory to perform the battery system temperature control method according to any one of claims 1 to 22.

36. A battery system, comprising:
a plurality of battery clusters; and
the temperature control apparatus according to any one of claims 23 to 35, wherein the temperature control apparatus is configured to perform temperature control on each of the plurality of battery clusters.

37. The battery system according to claim 36, wherein the battery system further comprises a temperature regulation apparatus;
the temperature control apparatus is configured to: send a temperature control command to the temperature regulation apparatus, to cause the temperature regulation apparatus to perform temperature control on each battery cluster according to the temperature control command.
